# EUROPEAN PATENT APPLICATION

(11) **EP 4 583 294 A1**
(43) Date of publication of application: **09.07.2025**
(21) Application number: 23860187.6
(22) Date of filing: 24.08.2023
(51) Int. Cl.: H01M 50/443, H01G 11/52, H01M 50/414, H01M 50/42, H01M 50/434, H01M 50/451

(54) **COMPOSITION FOR ELECTROCHEMICAL ELEMENT FUNCTIONAL LAYER, LAMINATE FOR ELECTROCHEMICAL ELEMENT, AND ELECTROCHEMICAL ELEMENT**

(30) Priority: 31.08.2022 JP 2022138704
(71) Applicant: Zeon Corporation, Tokyo 100-8246 (JP)
(72) Inventor: OGIHARA, Tasuku, Tokyo 100-8246 (JP)
(74) Representative: Maiwald GmbH
(86) International application number: PCT/JP2023/030600
(87) International publication number: WO 2024/048424

(57) **Abstract**

Provided is a composition for an electrochemical device functional layer that can form a functional layer having excellent adhesiveness. The composition for an electrochemical device functional layer contains a particulate polymer (X) and a particulate polymer (Y). A volume-average particle diameter of the particulate polymer (Y) is smaller than a volume-average particle diameter of the particulate polymer (X). One of the particulate polymer (X) and the particulate polymer (Y) includes a specific reactive monomer unit A and the other of the particulate polymer (X) and the particulate polymer (Y) includes a specific reactive monomer unit B.

## Description

### TECHNICAL FIELD

The present disclosure relates to a composition for an electrochemical device functional layer, a laminate for an electrochemical device, and an electrochemical device.

### BACKGROUND

Electrochemical devices such as lithium ion secondary batteries and electric double-layer capacitors have characteristics such as compact size, light weight, high energy-density, and the ability to be repeatedly charged and discharged, and are used in a wide variety of applications.

A lithium ion secondary battery, for example, normally includes battery members such as a positive electrode, a negative electrode, and a separator that isolates the positive electrode and the negative electrode from each other and prevents short-circuiting between the positive and negative electrodes.

Constituent members that include a functional layer such as a heat-resistant layer aimed at improving heat resistance of the constituent member or an adhesive layer aimed at improving adhesiveness between constituent members are used in electrochemical devices such as lithium ion secondary batteries. Specifically, electrodes that further include a functional layer formed on an electrode substrate in which an electrode mixed material layer is provided on a current collector and separators that include a functional layer formed on a separator substrate are used as battery members. A functional layer such as described above is formed by applying a composition for a secondary battery functional layer onto a substrate such as a separator substrate and then drying a coating film on the substrate. In recent years, further improvements to functional layers have been studied with the aim of further increasing the performance of electrochemical devices such as lithium ion secondary batteries. Specifically, Patent Literature (PTL) 1 to 3, for example, each propose a functional layer containing two types of particulate polymers having different particle diameters. PTL 1 to 3 report that a first particulate polymer among the two types of particulate polymers that has a large particle diameter can function as adhesive particles for adhering constituent members to each other via the functional layer, whereas a second particulate polymer among the two types of particulate polymers that has a small particle diameter can function as a binder for binding together components contained in the functional layer, such as the first particulate polymer and non-conductive heat-resistant particles, so as to prevent shedding of these components from the functional layer.

### CITATION LIST

### Patent Literature

PTL 1: WO2020/175292A1
PTL 2: WO2020/246394A1
PTL 3: WO2021/085144A1

### SUMMARY

### (Technical Problem)

However, a functional layer of the conventional technique described above still leaves room for improvement in terms of adhesiveness. Note that adhesiveness required of a functional layer may, for example, be adhesiveness before immersion in electrolyte solution (hereinafter, also referred to as "dry adhesiveness"), adhesiveness after immersion in electrolyte solution (hereinafter, also referred to as "wet adhesiveness"), etc.

Accordingly, one object of the present disclosure is to provide a composition for an electrochemical device functional layer that can form a functional layer having excellent adhesiveness.

Another object of the present disclosure is to provide a laminate for an electrochemical device that includes a functional layer obtained using this composition for an electrochemical device functional layer and an electrochemical device that includes this laminate for an electrochemical device.

### (Solution to Problem)

The inventor made diligent studies to achieve the objects set forth above. The inventor reached a new finding that it is possible to form a functional layer having excellent adhesiveness by using a composition for a functional layer that contains a particulate polymer (X) and a particulate polymer (Y) having a smaller volume-average particle diameter than the particulate polymer (X) and in which one of the particulate polymer (X) and the particulate polymer (Y) includes a specific reactive monomer unit A while the other of the particulate polymer (X) and the particulate polymer (Y) includes a specific reactive monomer unit B. In this manner, the inventor completed the present disclosure.

Specifically, with the aim of advantageously solving the problem set forth above, [1] a presently disclosed composition for an electrochemical device functional layer comprises a particulate polymer (X) and a particulate polymer (Y), wherein a volume-average particle diameter of the particulate polymer (Y) is smaller than a volume-average particle diameter of the particulate polymer (X), one of the particulate polymer (X) and the particulate polymer (Y) includes a reactive monomer unit A and the other of the particulate polymer (X) and the particulate polymer (Y) includes a reactive monomer unit B, the reactive monomer unit A is an epoxy group-containing monomer unit or a hydroxy group-containing monomer unit, the reactive monomer unit B includes one or more selected from the group consisting of a (meth)acrylamide group-containing monomer unit, an acid anhydride monomer unit, a sulfo group-containing monomer unit, a phosphate group-containing monomer unit, and an amino group-containing monomer unit in a case in which the reactive monomer unit A is an epoxy group-containing monomer unit, and the reactive monomer unit B includes one or more selected from the group consisting of a (meth)acrylamide group-containing monomer unit, a carboxy group-containing monomer unit, an acid anhydride monomer unit, a sulfo group-containing monomer unit, a phosphate group-containing monomer unit, and an epoxy group-containing monomer unit in a case in which the reactive monomer unit A is a hydroxy group-containing monomer unit.

By using a composition for a functional layer that contains a particulate polymer (X) and a particulate polymer (Y) having a smaller volume-average particle diameter than the particulate polymer (X) and in which one of the particulate polymer (X) and the particulate polymer (Y) includes the specific reactive monomer unit A set forth above while the other of the particulate polymer (X) and the particulate polymer (Y) includes the specific reactive monomer unit B set forth above in this manner, it is possible to form a functional layer having excellent adhesiveness.

Note that when a polymer is said to "include a monomer unit" in the present disclosure, this means that "a polymer obtained using that monomer includes a structural unit derived from the monomer" unless otherwise specified.

Also note that in the present disclosure, "(meth)acryl" indicates "acryl" and/or "methacryl".

An "epoxy group-containing monomer unit" included in one particulate polymer among the particulate polymer (X) and the particulate polymer (Y) is treated as the "reactive monomer unit A" in the present disclosure in a case in which the other particulate polymer among the particulate polymer (X) and the particulate polymer (Y) does not include a hydroxy group-containing monomer unit as the reactive monomer unit A and is treated as the "reactive monomer unit B" in the present disclosure in a case in which the other particulate polymer among the particulate polymer (X) and the particulate polymer (Y) does include a hydroxy group-containing monomer unit as the reactive monomer unit A.

The volume-average particle diameters of the particulate polymers (X) and (Y) referred to in the present disclosure can be measured by a method described in the EXAMPLES section of the present specification. Moreover, it is possible to judge that a composition for a functional layer contains a particulate polymer (X) and a particulate polymer (Y) having a smaller volume-average particle diameter than the particulate polymer (X) by, for example, observing a peak corresponding to the particulate polymer (X) at a large particle diameter side and a peak corresponding to the particulate polymer (Y) at a small particle diameter side in a particle diameter distribution (by volume) measured by laser diffraction.

[2] In the composition for an electrochemical device functional layer according to the foregoing [1], the volume-average particle diameter of the particulate polymer (X) is preferably not less than 1 µm and not more than 10 µm.

When the volume-average particle diameter of the particulate polymer (X) is within the specific range set forth above, adhesiveness of a functional layer that is formed using the composition for a functional layer can be further improved, and heat resistance of the functional layer can also be improved.

[3] In the composition for an electrochemical device functional layer according to the foregoing [1] or [2], the particulate polymer (X) preferably includes one or more selected from the group consisting of an aromatic monovinyl monomer unit, a (meth)acrylic acid cycloalkyl ester monomer unit, and a (meth)acrylic acid alkyl ester monomer unit.

Note that the term "(meth)acrylic acid alkyl ester" as used in the present disclosure is not inclusive of "(meth)acrylic acid cycloalkyl esters". In other words, an "alkyl group" that is included in a (meth)acrylic acid alkyl ester is a chain (linear or branched) saturated hydrocarbon group, whereas a "cycloalkyl group" (i.e., a cyclic saturated hydrocarbon group) that is included in a (meth)acrylic acid cycloalkyl ester is not considered to be encompassed by the term "alkyl group".

[4] In the composition for an electrochemical device functional layer according to any one of the foregoing [1] to [3], the particulate polymer (Y) preferably includes either or both of an aromatic monovinyl monomer unit and a (meth)acrylic acid alkyl ester monomer unit.

[5] In the composition for an electrochemical device functional layer according to any one of the foregoing [1] to [4], content of the particulate polymer (Y) is preferably not less than 10 parts by mass and not more than 200 parts by mass per 100 parts by mass of the particulate polymer (X).

When the content of the particulate polymer (Y) is within the specific range set forth above, adhesiveness of a functional layer that is formed using the composition for a functional layer can be further improved while also sufficiently ensuring the presence of voids between components in the functional layer, increasing air permeability of the functional layer, and improving ion conductivity of the functional layer to thereby enable improvement of output characteristics of an electrochemical device that includes the functional layer.

[6] The composition for an electrochemical device functional layer according to any one of the foregoing [1] to [5] preferably further comprises non-conductive heat-resistant particles.

When the composition for a functional layer further contains non-conductive heat-resistant particles, heat resistance of a functional layer can be improved by using the composition for a functional layer.

[7] In the composition for an electrochemical device functional layer according to the foregoing [6], content of the particulate polymer (Y) is preferably not less than 0.5 parts by mass and not more than 6 parts by mass per 100 parts by mass of the non-conductive heat-resistant particles.

When the content of the particulate polymer (Y) is within the specific range set forth above, adhesiveness of a functional layer that is formed using the composition for a functional layer can be further improved while also sufficiently ensuring the presence of voids between components in the functional layer, increasing air permeability of the functional layer, and improving ion conductivity of the functional layer to thereby enable improvement of output characteristics of an electrochemical device that includes the functional layer.

Moreover, with the aim of advantageously solving the problem set forth above, [8] a presently disclosed laminate for an electrochemical device comprises: a substrate; and a functional layer for an electrochemical device formed on the substrate, wherein the functional layer for an electrochemical device is obtained using the composition for an electrochemical device functional layer according to any one of the foregoing [1] to [7].

With a laminate for an electrochemical device such as set forth above, it is possible to improve electrochemical characteristics (for example, cycle characteristics and output characteristics) of an electrochemical device that includes the laminate for an electrochemical device.

[9] In the laminate for an electrochemical device according to the foregoing [8], a ratio of the volume-average particle diameter of the particulate polymer (X) relative to thickness of a non-conductive heat-resistant particle layer formed of non-conductive heat-resistant particles is preferably not less than 0.8 and not more than 10.

Note that the thickness of a non-conductive heat-resistant particle layer referred to in the present disclosure can be measured by a method described in the EXAMPLES section of the present specification.

Furthermore, with the aim of advantageously solving the problem set forth above, [10] a presently disclosed electrochemical device comprises the laminate for an electrochemical device according to the foregoing [8] or [9].

An electrochemical device such as set forth above can display excellent electrochemical characteristics (for example, cycle characteristics and output characteristics).

### (Advantageous Effect)

According to the present disclosure, it is possible to provide a composition for an electrochemical device functional layer that can form a functional layer having excellent adhesiveness.

Moreover, according to the present disclosure, it is possible to provide a laminate for an electrochemical device that includes a functional layer obtained using this composition for an electrochemical device functional layer and an electrochemical device that includes this laminate for an electrochemical device.

### DETAILED DESCRIPTION

The following provides a detailed description of embodiments of the present disclosure.

The presently disclosed composition for an electrochemical device functional layer (hereinafter, also referred to simply as a "composition for a functional layer") can be used as a material in formation of a functional layer that is included in the presently disclosed laminate for an electrochemical device (hereinafter, also referred to simply as a "laminate"). Moreover, the presently disclosed laminate for an electrochemical device can be used in production of the presently disclosed electrochemical device.

### (Composition for electrochemical device functional layer)

The presently disclosed composition for an electrochemical device functional layer contains at least a particulate polymer (X) and a particulate polymer (Y). The volume-average particle diameter of the particulate polymer (X) is larger than the volume-average particle diameter of the particulate polymer (Y). Moreover, one of the particulate polymer (X) and the particulate polymer (Y) includes a specific reactive monomer unit A while the other of the particulate polymer (X) and the particulate polymer (Y) includes a specific reactive monomer unit B. The presently disclosed composition for a functional layer makes it possible to form a functional layer having excellent adhesiveness.

Note that the presently disclosed composition for a functional layer can optionally further contain non-conductive heat-resistant particles, an amine compound, and other components besides the particulate polymer (X) and the particulate polymer (Y) described above. Moreover, the presently disclosed composition for a functional layer can, for example, be a slurry composition having the particulate polymer (X) and the particulate polymer (Y) dispersed in a dispersion medium such as water.

In a functional layer that has been formed using the presently disclosed composition for a functional layer, a reactive monomer unit A that is present at the surface of one of the particulate polymer (X) and the particulate polymer (Y) and a reactive monomer unit B that is present at the surface of the other of the particulate polymer (X) and the particulate polymer (Y) can react to form a bond. This causes strong adhesion of the particulate polymer (X) and the particulate polymer (Y), and, as a result, can improve adhesive strength between the particulate polymer (X) and non-conductive heat-resistant particles via the particulate polymer (Y), adhesive strength among the particulate polymer (X) via the particulate polymer (Y), and so forth. Consequently, shedding from the functional layer of the particulate polymer (X) that can function as adhesive particles can be inhibited, and thus adhesiveness between members via the functional layer (i.e., adhesiveness of the functional layer) can be sufficiently improved.

### <Reactive monomer units>

In the presently disclosed composition for a functional layer, one of the particulate polymer (X) and the particulate polymer (Y) includes a reactive monomer unit A while the other of the particulate polymer (X) and the particulate polymer (Y) includes a reactive monomer unit B.

In the presently disclosed composition for a functional layer, it should be the case that the particulate polymer (X) includes at least one among the reactive monomer unit A and the reactive monomer unit B while the particulate polymer (Y) includes at least the other among the reactive monomer unit A and the reactive monomer unit B.

For example, in the presently disclosed composition for a functional layer, it may be the case that:
(1) a particulate polymer (X) that includes both the reactive monomer unit A and the reactive monomer unit B and a particulate polymer (Y) that includes both the reactive monomer unit A and the reactive monomer unit B are used;
(2) a particulate polymer (X) that includes both the reactive monomer unit A and the reactive monomer unit B and a particulate polymer (Y) that includes the reactive monomer unit A and does not include the reactive monomer unit B are used;
(3) a particulate polymer (X) that includes both the reactive monomer unit A and the reactive monomer unit B and a particulate polymer (Y) that includes the reactive monomer unit B and does not include the reactive monomer unit A are used;
(4) a particulate polymer (X) that includes the reactive monomer unit A and does not include the reactive monomer unit B and a particulate polymer (Y) that includes both the reactive monomer unit A and the reactive monomer unit B are used;
(5) a particulate polymer (X) that includes the reactive monomer unit B and does not include the reactive monomer unit A and a particulate polymer (Y) that includes both the reactive monomer unit A and the reactive monomer unit B are used;
(6) a particulate polymer (X) that includes the reactive monomer unit A and does not include the reactive monomer unit B and a particulate polymer (Y) that includes the reactive monomer unit B and does not include the reactive monomer unit A are used; or
(7) a particulate polymer (X) that includes the reactive monomer unit B and does not include the reactive monomer unit A and a particulate polymer (Y) that includes the reactive monomer unit A and does not include the reactive monomer unit B are used.

Moreover, it is preferable that (6) a particulate polymer (X) that includes the reactive monomer unit A and does not include the reactive monomer unit B and a particulate polymer (Y) that includes the reactive monomer unit B and does not include the reactive monomer unit A are used in the presently disclosed composition for a functional layer since it is easier to introduce the reactive monomer unit A into the particulate polymer (X) than it is the reactive monomer unit B.

### <<Reactive monomer unit A>>

The reactive monomer unit A is an epoxy group-containing monomer unit or a hydroxy group-containing monomer unit.

Note that in a case in which the particulate polymer (X) includes an epoxy group-containing monomer unit as the reactive monomer unit A, it is normally the case that the particulate polymer (X) does not include a hydroxy group-containing monomer unit as the reactive monomer unit A, though no specific limitations are made. Also note that in a case in which the particulate polymer (X) includes a hydroxy group-containing monomer unit as the reactive monomer unit A, it is normally the case that the particulate polymer (X) does not include an epoxy group-containing monomer unit as the reactive monomer unit A, though no specific limitations are made.

Likewise, in a case in which the particulate polymer (Y) includes an epoxy group-containing monomer unit as the reactive monomer unit A, it is normally the case that the particulate polymer (Y) does not include a hydroxy group-containing monomer unit as the reactive monomer unit A, though no specific limitations are made. Moreover, in a case in which the particulate polymer (Y) includes a hydroxy group-containing monomer unit as the reactive monomer unit A, it is normally the case that the particulate polymer (Y) does not include an epoxy group-containing monomer unit as the reactive monomer unit A, though no specific limitations are made.

### [Epoxy group-containing monomer unit]

Examples of epoxy group-containing monomers that can form an epoxy group-containing monomer unit include unsaturated glycidyl ethers such as vinyl glycidyl ether, allyl glycidyl ether, butenyl glycidyl ether, o-allylphenyl glycidyl ether, and glycidyl(2-butenyl) ether; monoepoxides of dienes and polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl 4-heptenoate, glycidyl sorbate, glycidyl linoleate, glycidyl 4-methyl-3-pentenoate, glycidyl ester of 3-cyclohexenecarboxylic acid, and glycidyl ester of 4-methyl-3-cyclohexenecarboxylic acid.

Note that one of these epoxy group-containing monomers may be used individually, or two or more of these epoxy group-containing monomers may be used in combination in a freely selected ratio.

In particular, from a viewpoint of further improving adhesiveness (particularly wet adhesiveness) of a functional layer that is formed using the composition for a functional layer, unsaturated glycidyl ethers and glycidyl esters of unsaturated carboxylic acids are preferable, allyl glycidyl ether and glycidyl methacrylate are more preferable, and glycidyl methacrylate is even more preferable as an epoxy group-containing monomer.

### [Hydroxy group-containing monomer unit]

Examples of hydroxy group-containing monomers that can form a hydroxy group-containing monomer unit include alkanol esters of ethylenically unsaturated carboxylic acids such as 2-hydroxyethyl acrylate, 2-hydroxypropyl acrylate, 4-hydroxybutyl acrylate, 2-hydroxyethyl methacrylate, 2-hydroxypropyl methacrylate, 4-hydroxybutyl methacrylate, di-2-hydroxyethyl maleate, di-4-hydroxybutyl maleate, di-2-hydroxypropyl itaconate, 1,4-cyclohexanedimethanol monoacrylate, and 2-hydroxy-3-phenoxypropyl acrylate; esters of (meth)acrylic acid and polyalkylene glycol represented by a general formula: CH₂=CR¹-COO-(C_{q}H_{2q}O)ₚ-H (where p represents an integer of 2 to 9, q represents an integer of 2 to 4, and R¹ represents hydrogen or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

Note that one of these hydroxy group-containing monomers may be used individually, or two or more of these hydroxy group-containing monomers may be used in combination in a freely selected ratio.

In particular, from a viewpoint of further improving adhesiveness (particularly wet adhesiveness) of a functional layer that is formed using the composition for a functional layer, alkanol esters of ethylenically unsaturated carboxylic acids are preferable, and 4-hydroxybutyl acrylate, 1,4-cyclohexanedimethanol monoacrylate, and 2-hydroxy-3-phenoxypropyl acrylate are more preferable as hydroxy group-containing monomers.

Note that subsequently described (meth)acrylamide group-containing monomers that include a hydroxyalkyl group, such as N-methylol (meth)acrylamide, are considered to not be included among hydroxy group-containing monomers.

Also note that in the present disclosure, "(meth)allyl" indicates "allyl" and/or "methallyl".

### <<Reactive monomer unit B>>

The reactive monomer unit B is a monomer unit that can react with the reactive monomer unit A to form a bond. Moreover, the type of reactive monomer unit B is selected in accordance with the type of reactive monomer unit A.

### [Reactive monomer unit B1]

Specifically, in a case in which the reactive monomer unit A is an epoxy group-containing monomer unit, the reactive monomer unit B (hereinafter, also referred to as a "reactive monomer unit B1" in this case) is required to include one or more selected from the group consisting of a (meth)acrylamide group-containing monomer unit, an acid anhydride monomer unit, a sulfo group-containing monomer unit, a phosphate group-containing monomer unit, and an amino group-containing monomer unit.

Moreover, the reactive monomer unit B1 may optionally further include a carboxy group-containing monomer unit. For example, in a case in which the particulate polymer (Y) includes the reactive monomer unit B1, stability during production of the particulate polymer (Y) can be improved through the particulate polymer (Y) further including a carboxy group-containing monomer unit as the reactive monomer unit B1.

Note that the reactive monomer unit B1 does not normally include a monomer unit other than the aforementioned (meth)acrylamide group-containing monomer unit, acid anhydride monomer unit, sulfo group-containing monomer unit, phosphate group-containing monomer unit, amino group-containing monomer unit, and carboxy group-containing monomer unit, though no specific limitations are made.

### -(Meth)acrylamide group-containing monomer unit-

A (meth)acrylamide group-containing monomer that can form a (meth)acrylamide group-containing monomer unit is a monomer having a structure represented by a general formula: CH₂=CR²-COO-NH-R³ (where R² is hydrogen or a methyl group and R³ is a hydrogen atom or any substituent). Although no specific limitations are made, R³ in the preceding formula is preferably a hydrogen atom, an alkyl group having a carbon number of not less than 1 and not more than 10, or a hydroxyalkyl group having a carbon number of not less than 1 and not more than 10, more preferably a hydrogen atom, an alkyl group having a carbon number of not less than 1 and not more than 5, or a hydroxyalkyl group having a carbon number of not less than 1 and not more than 5, and even more preferably a hydrogen atom.

Examples of (meth)acrylamide group-containing monomers that can form a (meth)acrylamide group-containing monomer unit include (meth)acrylamide, N-methyl(meth)acrylamide, N-isopropyl(meth)acrylamide, and N-methylol(meth)acrylamide.

Note that one of these (meth)acrylamide group-containing monomers may be used individually, or two or more of these (meth)acrylamide group-containing monomers may be used in combination in a freely selected ratio.

In particular, acrylamide is preferable as a (meth)acrylamide group-containing monomer.

### -Acid anhydride monomer unit-

Examples of acid anhydride monomers that can form an acid anhydride monomer unit include anhydrides of dicarboxylic acids such as maleic anhydride, methylmaleic anhydride, and dimethylmaleic anhydride.

Note that one of these acid anhydride monomers may be used individually, or two or more of these acid anhydride monomers may be used in combination in a freely selected ratio.

In particular, maleic anhydride is preferable as an acid anhydride monomer.

### -Sulfo group-containing monomer unit-

Examples of sulfo group-containing monomers that can form a sulfo group-containing monomer unit include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2-hydroxypropane sulfonic acid.

Note that one of these sulfo group-containing monomers may be used individually, or two or more of these sulfo group-containing monomers may be used in combination in a freely selected ratio.

### -Phosphate group-containing monomer unit-

Examples of phosphate group-containing monomers that can form a phosphate group-containing monomer unit include 2-(meth)acryloyloxyethyl phosphate, methyl-2-(meth)acryloyloxyethyl phosphate, and ethyl-(meth)acryloyloxyethyl phosphate.

In the present disclosure, "(meth)acryloyl" indicates "acryloyl" and/or "methacryloyl".

Note that one of these phosphate group-containing monomers may be used individually, or two or more of these phosphate group-containing monomers may be used in combination in a freely selected ratio.

### -Amino group-containing monomer unit-

An amino group-containing monomer that can form an amino group-containing monomer unit is a monomer that is an amine compound and that includes a group displaying polymerization reactivity. Note that a primary amine compound or a secondary amine compound is preferable as an amine compound that can be used as an amino group-containing monomer.

For example, aminoethyl vinyl ether or the like may be used as an amino group-containing monomer.

Note that one amino group-containing monomer may be used individually, or two or more amino group-containing monomers may be used in combination in a freely selected ratio.

Moreover, it is also possible to introduce an amino group-containing monomer unit into a particulate polymer by performing subsequent chemical modification of a particulate polymer obtained through a monomer polymerization reaction. Note that in a case in which an amino group is introduced through chemical modification of a monomer unit other than an amino group-containing monomer unit in a particulate polymer, the monomer unit into which the amino group has been introduced is treated as an amino group-containing monomer unit.

### -Carboxy group-containing monomer unit-

Examples of carboxy group-containing monomers that can form a carboxy group-containing monomer unit include monocarboxylic acids and dicarboxylic acids. Examples of monocarboxylic acids include acrylic acid, methacrylic acid, and crotonic acid. Examples of dicarboxylic acids include maleic acid, fumaric acid, and itaconic acid.

Note that one of these carboxy group-containing monomers may be used individually, or two or more of these carboxy group-containing monomers may be used in combination in a freely selected ratio.

In particular, acrylic acid, methacrylic acid, and itaconic acid are preferable, methacrylic acid and itaconic acid are more preferable, and methacrylic acid is even more preferable as a carboxy group-containing monomer.

### [Reactive monomer unit B2]

In a case in which the reactive monomer unit A is a hydroxy group-containing monomer unit, the reactive monomer unit B (hereinafter, also referred to as a "reactive monomer unit B2" in this case) is required to include one or more selected from the group consisting of a (meth)acrylamide group-containing monomer unit, a carboxy group-containing monomer unit, an acid anhydride monomer unit, a sulfo group-containing monomer unit, a phosphate group-containing monomer unit, and an epoxy group-containing monomer unit.

Note that the reactive monomer unit B2 does not normally include a monomer unit other than the aforementioned (meth)acrylamide group-containing monomer unit, carboxy group-containing monomer unit, acid anhydride monomer unit, sulfo group-containing monomer unit, phosphate group-containing monomer unit, and epoxy group-containing monomer unit, though no specific limitations are made.

Specific examples and preferable examples of monomers that can form a (meth)acrylamide group-containing monomer unit, a carboxy group-containing monomer unit, an acid anhydride monomer unit, a sulfo group-containing monomer unit, or a phosphate group-containing monomer unit as the reactive monomer unit B2 are the same as specific examples and preferable examples of monomers that can be used to form each monomer unit as the reactive monomer unit B1 described above.

Moreover, specific examples and preferable examples of monomers that can form an epoxy group-containing monomer unit as the reactive monomer unit B2 are the same as specific examples and preferable examples of monomers that can be used to form an epoxy group-containing monomer unit as the reactive monomer unit A described above.

### <Particulate polymer (X)>

The particulate polymer (X) can function as adhesive particles that adhere members to each other via a functional layer that has been formed using the composition for a functional layer. Note that the particulate polymer (X) may have a particulate form or may have any other form after members have been adhered via a functional layer formed using the composition for a functional layer. Moreover, the particulate polymer (X) may by a crystalline macromolecular polymer, an amorphous macromolecular polymer, or a mixture thereof.

### <<Volume-average particle diameter>>

The volume-average particle diameter of the particulate polymer (X) is larger than the volume-average particle diameter of the particulate polymer (Y).

Although no specific limitations are placed on the volume-average particle diameter of the particulate polymer (X) so long as it is larger than the volume-average particle diameter of the particulate polymer (Y), the volume-average particle diameter of the particulate polymer (X) is preferably 1 µm or more, more preferably 1.5 µm or more, even more preferably 1.8 µm or more, further preferably 2.1 µm or more, and even further preferably 3.5 µm or more, and is preferably 10 µm or less, more preferably 8 µm or less, even more preferably 6 µm or less, further preferably 5.5 µm or less, and even further preferably 5 µm or less. When the volume-average particle diameter of the particulate polymer (X) is not less than any of the lower limits set forth above, this makes it easier for the particulate polymer (X) to protrude relative to materials other than the particulate polymer (X) and to come into contact with an electrochemical device member at a thickness direction surface of a functional layer formed using the composition for a functional layer, and, as a result, can further improve adhesiveness of the functional layer. On the other hand, when the volume-average particle diameter of the particulate polymer (X) is not more than any of the upper limits set forth above, this increases the number of adhesion points between the particulate polymer and materials other than the particulate polymer in a functional layer formed using the composition for a functional layer, inhibits shedding (also referred to as "dusting") of constituent components of the functional layer, and, as a result, can further improve adhesiveness of the functional layer. Moreover, when the volume-average particle diameter of the particulate polymer (X) is within any of the specific ranges set forth above, heat resistance of a formed functional layer can be improved. In other words, excellent heat resistance can be imparted to a laminate that includes the functional layer.

Note that the volume-average particle diameters of the particulate polymers (X) and (Y) can be adjusted by altering the chemical compositions and the production conditions of the particulate polymers, for example.

### <<Chemical composition>>

The particulate polymer (X) includes at least one among the reactive monomer unit A and the reactive monomer unit B described above.

### [Reactive monomer unit A]

The particulate polymer (X) can include an epoxy group-containing monomer unit or a hydroxy group-containing monomer unit as the reactive monomer unit A. Moreover, it is preferable that the particulate polymer (X) includes an epoxy group-containing monomer unit as the reactive monomer unit A.

In a case in which the particulate polymer (X) includes the reactive monomer unit A, the proportional content of the reactive monomer unit A in the particulate polymer (X) when all monomer units in the particulate polymer (X) are taken to be 100 mass% is preferably 0.5 mass% or more, more preferably 1 mass% or more, even more preferably 5 mass% or more, further preferably 8 mass% or more, and even further preferably 12 mass% or more, and is preferably 30 mass% or less, more preferably 28 mass% or less, even more preferably 27 mass% or less, and further preferably 26 mass% or less. When the proportional content of the reactive monomer unit A in the particulate polymer (X) is not less than any of the lower limits set forth above, adhesiveness of a functional layer that is formed using the composition for a functional layer can be further improved because there is sufficient bond formation between the particulate polymer (X) and the particulate polymer (Y) through the reactive monomer unit A and the reactive monomer unit B. On the other hand, when the proportional content of the reactive monomer unit A in the particulate polymer (X) is not more than any of the upper limits set forth above, stability during production of the particulate polymer (X) can be improved.

Note that in a case in which the particulate polymer (X) includes the reactive monomer unit A, the proportional content of the reactive monomer unit A in the particulate polymer (X) when all monomer units in the particulate polymer (X) are taken to be 100 mass% may be 15 mass% or more, may be 18 mass% or more, or may be 22 mass% or more, and may be 22 mass% or less, may be 18 mass% or less, may be 15 mass% or less, or may be 12 mass% or less.

Note that the proportional content of each monomer unit in a polymer referred to in the present disclosure can be measured by a nuclear magnetic resonance (NMR) method such as ¹H-NMR or ¹³C-NMR, X-ray photoelectron spectroscopy (XPS), or the like.

### [Reactive monomer unit B]

The particulate polymer (X) can include the reactive monomer unit B.

In a case in which the particulate polymer (X) includes the reactive monomer unit B, the proportional content of the reactive monomer unit B in the particulate polymer (X) when all monomer units in the particulate polymer (X) are taken to be 100 mass% is preferably 0.5 mass% or more, more preferably 1 mass% or more, even more preferably 1.5 mass% or more, further preferably 2 mass% or more, and even further preferably 2.5 mass% or more, and is preferably 30 mass% or less, more preferably 20 mass% or less, even more preferably 15 mass% or less, further preferably 10 mass% or less, and even further preferably 5 mass% or less. When the proportional content of the reactive monomer unit B in the particulate polymer (X) is not less than any of the lower limits set forth above, adhesiveness of a functional layer that is formed using the composition for a functional layer can be further improved because there is sufficient bond formation between the particulate polymer (X) and the particulate polymer (Y) through the reactive monomer unit A and the reactive monomer unit B. On the other hand, when the proportional content of the reactive monomer unit B in the particulate polymer (X) is not more than any of the upper limits set forth above, stability during production of the particulate polymer (X) can be improved.

### -Reactive monomer unit B1-

In a case in which the particulate polymer (Y) includes an epoxy group-containing monomer unit as the reactive monomer unit A, the particulate polymer (X) includes the reactive monomer unit B1 including one or more selected from the group consisting of a (meth)acrylamide group-containing monomer unit, an acid anhydride monomer unit, a sulfo group-containing monomer unit, a phosphate group-containing monomer unit, and an amino group-containing monomer unit as the reactive monomer unit B.

Note that the particulate polymer (X) may include just one of the aforementioned types of monomer units as the reactive monomer unit B1 or may include two or more of the aforementioned types of monomer units in a freely selected ratio as the reactive monomer unit B1.

Moreover, it is preferable that the particulate polymer (X) includes a (meth)acrylamide group-containing monomer unit as the reactive monomer unit B1.

Furthermore, the particulate polymer (X) may further include a carboxy group-containing monomer unit as the reactive monomer unit B1.

The proportional content of the reactive monomer unit B1 (i.e., the total proportional content of a (meth)acrylamide group-containing monomer unit, an acid anhydride monomer unit, a sulfo group-containing monomer unit, a phosphate group-containing monomer unit, an amino group-containing monomer unit, and a carboxy group-containing monomer unit) in the particulate polymer (X) when all monomer units in the particulate polymer (X) are taken to be 100 mass% is preferably 0.5 mass% or more, more preferably 1 mass% or more, even more preferably 1.5 mass% or more, further preferably 2 mass% or more, and even further preferably 2.5 mass% or more, and is preferably 30 mass% or less, more preferably 20 mass% or less, even more preferably 15 mass% or less, further preferably 10 mass% or less, and even further preferably 5 mass% or less. When the proportional content of the reactive monomer unit B1 in the particulate polymer (X) is not less than any of the lower limits set forth above, adhesiveness of a functional layer that is formed using the composition for a functional layer can be further improved because there is sufficient bond formation between the particulate polymer (X) and the particulate polymer (Y) through the reactive monomer unit A and the reactive monomer unit B. On the other hand, when the proportional content of the reactive monomer unit B1 in the particulate polymer (X) is not more than any of the upper limits set forth above, stability during production of the particulate polymer (X) can be improved.

The proportional content of the reactive monomer unit B1 exclusive of a carboxy group-containing monomer unit (i.e., the total proportional content of a (meth)acrylamide group-containing monomer unit, an acid anhydride monomer unit, a sulfo group-containing monomer unit, a phosphate group-containing monomer unit, and an amino group-containing monomer unit) in the particulate polymer (X) when all monomer units in the particulate polymer (X) are taken to be 100 mass% is preferably 0.5 mass% or more, more preferably 1 mass% or more, even more preferably 1.5 mass% or more, further preferably 2 mass% or more, and even further preferably 2.5 mass% or more, and is preferably 30 mass% or less, more preferably 20 mass% or less, even more preferably 15 mass% or less, further preferably 10 mass% or less, and even further preferably 5 mass% or less. When the proportional content of the reactive monomer unit B1 exclusive of a carboxy group-containing monomer unit in the particulate polymer (X) is not less than any of the lower limits set forth above, adhesiveness of a functional layer that is formed using the composition for a functional layer can be further improved because there is sufficient bond formation between the particulate polymer (X) and the particulate polymer (Y) through the reactive monomer unit A and the reactive monomer unit B. On the other hand, when the proportional content of the reactive monomer unit B1 exclusive of a carboxy group-containing monomer unit in the particulate polymer (X) is not more than any of the upper limits set forth above, stability during production of the particulate polymer (X) can be improved.

The proportional content of a carboxy group-containing monomer unit as the reactive monomer unit B1 in the particulate polymer (X) can be adjusted as appropriate to the extent that the desired effects according to the present disclosure are obtained.

Moreover, it may of course be the case that the particulate polymer (X) does not include a carboxy group-containing monomer unit as the reactive monomer unit B1.

### -Reactive monomer unit B2-

In a case in which the particulate polymer (Y) includes a hydroxy group-containing monomer unit as the reactive monomer unit A, the particulate polymer (X) includes the reactive monomer unit B2 including one or more selected from the group consisting of a (meth)acrylamide group-containing monomer unit, a carboxy group-containing monomer unit, an acid anhydride monomer unit, a sulfo group-containing monomer unit, a phosphate group-containing monomer unit, and an epoxy group-containing monomer unit as the reactive monomer unit B.

Note that the particulate polymer (X) may include just one of the aforementioned types of monomer units as the reactive monomer unit B2 or may include two or more of the aforementioned types of monomer units in a freely selected ratio as the reactive monomer unit B2.

The proportional content of the reactive monomer unit B2 (i.e., the total proportional content of a (meth)acrylamide group-containing monomer unit, a carboxy group-containing monomer unit, an acid anhydride monomer unit, a sulfo group-containing monomer unit, a phosphate group-containing monomer unit, and an epoxy group-containing monomer unit) in the particulate polymer (X) when all monomer units in the particulate polymer (X) are taken to be 100 mass% is preferably 0.5 mass% or more, more preferably 1 mass% or more, even more preferably 1.5 mass% or more, further preferably 2 mass% or more, and even further preferably 2.5 mass% or more, and is preferably 30 mass% or less, more preferably 20 mass% or less, even more preferably 15 mass% or less, further preferably 10 mass% or less, and even further preferably 5 mass% or less.

When the proportional content of the reactive monomer unit B2 in the particulate polymer (X) is not less than any of the lower limits set forth above, adhesiveness of a functional layer that is formed using the composition for a functional layer can be further improved because there is sufficient bond formation between the particulate polymer (X) and the particulate polymer (Y) through the reactive monomer unit A and the reactive monomer unit B.

On the other hand, when the proportional content of the reactive monomer unit B2 in the particulate polymer (X) is not more than any of the upper limits set forth above, stability during production of the particulate polymer (X) can be improved.

### [Other monomers]

The particulate polymer (X) can further include monomer units other than the reactive monomer unit A and the reactive monomer unit B described above.

Moreover, the particulate polymer (X) preferably further includes one or more selected from the group consisting of an aromatic monovinyl monomer unit, a (meth)acrylic acid cycloalkyl ester monomer unit, and a (meth)acrylic acid alkyl ester monomer unit. For example, the particulate polymer (X) may include an aromatic monovinyl monomer unit and a (meth)acrylic acid alkyl ester monomer unit, or the particulate polymer (X) may include a (meth)acrylic acid cycloalkyl ester monomer unit and a (meth)acrylic acid alkyl ester monomer unit.

Furthermore, it is preferable that the particulate polymer (X) further includes a cross-linkable monomer unit.

Note that the particulate polymer (X) may or may not include monomer units other than the aforementioned reactive monomer unit A, reactive monomer unit B, aromatic monovinyl monomer unit, (meth)acrylic acid cycloalkyl ester monomer unit, (meth)acrylic acid alkyl ester monomer unit, and cross-linkable monomer unit without any specific limitations.

### -Aromatic monovinyl monomer unit-

Examples of aromatic monovinyl monomers that can form an aromatic monovinyl monomer unit include, but are not specifically limited to, styrene, α-methylstyrene, styrene sulfonic acid, butoxystyrene, and vinylnaphthalene, of which, styrene is preferable.

Note that one of these aromatic monovinyl monomers may be used individually, or two or more of these aromatic monovinyl monomers may be used in combination in a freely selected ratio.

The proportional content of an aromatic monovinyl monomer unit in the particulate polymer (X) when all monomer units in the particulate polymer (X) are taken to be 100 mass% is preferably 30 mass% or more, more preferably 45 mass% or more, and even more preferably 55 mass% or more, and is preferably 95 mass% or less, more preferably 90 mass% or less, even more preferably 85 mass% or less, further preferably 75 mass% or less, even further preferably 70 mass% or less, and particularly preferably 65 mass% or less.

When the proportional content of an aromatic monovinyl monomer unit in the particulate polymer (X) is within any of the specific ranges set forth above, adhesiveness of a functional layer that is formed using the composition for a functional layer can be further improved.

### -(Meth)acrylic acid cycloalkyl ester monomer unit-

A (meth)acrylic acid cycloalkyl ester having a cycloalkyl group carbon number of not less than 6 and not more than 12, such as cyclohexyl (meth)acrylate, can suitably be used as a (meth)acrylic acid cycloalkyl ester monomer that can form a (meth)acrylic acid cycloalkyl ester monomer unit.

Note that one (meth)acrylic acid cycloalkyl ester monomer may be used individually, or two or more (meth)acrylic acid cycloalkyl ester monomers may be used in combination in a freely selected ratio.

The proportional content of a (meth)acrylic acid cycloalkyl ester monomer unit in the particulate polymer (X) when all monomer units in the particulate polymer (X) are taken to be 100 mass% is preferably 30 mass% or more, more preferably 45 mass% or more, and even more preferably 55 mass% or more, and is preferably 95 mass% or less, more preferably 90 mass% or less, even more preferably 85 mass% or less, and further preferably 80 mass% or less.

When the proportional content of a (meth)acrylic acid cycloalkyl ester monomer unit in the particulate polymer (X) is within any of the specific ranges set forth above, adhesiveness of a functional layer that is formed using the composition for a functional layer can be further improved.

### -(Meth)acrylic acid alkyl ester monomer unit-

Examples of (meth)acrylic acid alkyl ester monomers that can form a (meth)acrylic acid alkyl ester monomer unit include acrylic acid alkyl esters such as methyl acrylate, ethyl acrylate, n-propyl acrylate, isopropyl acrylate, butyl acrylate (n-butyl acrylate, t-butyl acrylate, etc.), pentyl acrylate, hexyl acrylate, heptyl acrylate, octyl acrylate (2-ethylhexyl acrylate, etc.), nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, butyl methacrylate (n-butyl methacrylate, t-butyl methacrylate, etc.), pentyl methacrylate, hexyl methacrylate, heptyl methacrylate, octyl methacrylate (2-ethylhexyl methacrylate, etc.), nonyl methacrylate, decyl methacrylate, lauryl methacrylate, n-tetradecyl methacrylate, and stearyl methacrylate.

In particular, (meth)acrylic acid alkyl ester monomers having an alkyl group carbon number of not less than 4 and not more than 18 are preferable, (meth)acrylic acid alkyl ester monomers having an alkyl group carbon number of not less than 6 and not more than 12 are more preferable, (meth)acrylic acid alkyl ester monomers having an alkyl group carbon number of not less than 6 and not more than 10 are even more preferable, and 2-ethylhexyl acrylate is particularly preferable as a (meth)acrylic acid alkyl ester monomer. By using a (meth)acrylic acid alkyl ester monomer having an alkyl group carbon number that is within any of the specific ranges set forth above, it is possible to suitably reduce the degree of swelling in electrolyte solution of the obtained particulate polymer (X) and to improve output characteristics of an electrochemical device that includes a functional layer.

Note that one of these (meth)acrylic acid alkyl ester monomers may be used individually, or two or more of these (meth)acrylic acid alkyl ester monomers may be used in combination in a freely selected ratio.

The proportional content of a (meth)acrylic acid alkyl ester monomer unit in the particulate polymer (X) when all monomer units in the particulate polymer (X) are taken to be 100 mass% is preferably 2 mass% or more, more preferably 5 mass% or more, and even more preferably 10 mass% or more, and is preferably 60 mass% or less, more preferably 40 mass% or less, even more preferably 30 mass% or less, further preferably 25 mass% or less, and even further preferably 20 mass% or less.

When the proportional content of a (meth)acrylic acid alkyl ester monomer unit in the particulate polymer (X) is not less than any of the lower limits set forth above, excessive lowering of the glass-transition temperature of the particulate polymer (X) can be avoided, and sticking together (also referred to as "blocking") of a functional layer formed using the composition for a functional layer and an electrochemical device member can be inhibited when a laminate or an electrochemical device including the functional layer is stored and transported in a wound up state. In other words, blocking resistance of a functional layer can be improved.

On the other hand, when the proportional content of a (meth)acrylic acid alkyl ester monomer unit in the particulate polymer (X) is not more than any of the upper limits set forth above, adhesiveness of a functional layer that is formed using the composition for a functional layer can be further improved.

### -Cross-linkable monomer unit-

Examples of monomers that can form a cross-linkable monomer unit include cross-linkable monomers that include two or more groups displaying polymerization reactivity.

Examples of such cross-linkable monomers include (meth)acrylic acid allyl ester monomers such as allyl methacrylate; aromatic divinyl monomers such as divinylbenzene and divinylnaphthalene; di(meth)acrylic acid ester monomers such as diethylene glycol dimethacrylate, ethylene glycol dimethacrylate, diethylene glycol diacrylate, and 1,3-butylene glycol diacrylate; and tri(meth)acrylic acid ester monomers such as trimethylolpropane trimethacrylate and trimethylolpropane triacrylate.

In particular, allyl methacrylate and ethylene glycol dimethacrylate are preferable as cross-linkable monomers.

Note that one of these cross-linkable monomers may be used individually, or two or more of these cross-linkable monomers may be used in combination in a freely selected ratio.

The proportional content of a cross-linkable monomer unit in the particulate polymer (X) when all monomer units in the particulate polymer (X) are taken to be 100 mass% is preferably 0.05 mass% or more, more preferably 0.1 mass% or more, and even more preferably 0.15 mass% or more, and is preferably 5 mass% or less, more preferably 3 mass% or less, and even more preferably 2 mass% or less.

When the proportional content of a cross-linkable monomer unit in the particulate polymer (X) is not less than any of the lower limits set forth above, the amount of elution of the particulate polymer (X) into electrolyte solution can be reduced, and adhesiveness (particularly wet adhesiveness) of a functional layer that is formed using the composition for a functional layer can be further improved as a result of the particulate polymer (X) being sufficiently cross-linked.

On the other hand, when the proportional content of a cross-linkable monomer unit in the particulate polymer (X) is not more than any of the upper limits set forth above, adhesiveness (particularly wet adhesiveness) of a functional layer that is formed using the composition for a functional layer can be further improved because excessive cross-linking of the particulate polymer (X) is avoided, thus enabling simple deformation of the particulate polymer (X).

### <Glass-transition temperature>

The glass-transition temperature of the particulate polymer (X) is preferably 40°C or higher, more preferably 50°C or higher, even more preferably 60°C or higher, and further preferably 65°C or higher, and is preferably 110°C or lower, more preferably 100°C or lower, and even more preferably 95°C or lower.

When the glass-transition temperature of the particulate polymer (X) is not lower than any of the lower limits set forth above, blocking resistance of a functional layer that is formed using the composition for a functional layer can be improved because this enables suitably low thermal deformation of the particulate polymer (X).

On the other hand, when the glass-transition temperature of the particulate polymer (X) is not higher than any of the upper limits set forth above, adhesiveness (particularly dry adhesiveness) of a functional layer that is formed using the composition for a functional layer can be further improved because this enables suitably high thermal deformation of the particulate polymer (X) during hot pressing.

Note that the glass-transition temperature referred to in the present disclosure can be measured by a method described in the EXAMPLES section of the present specification.

### <Degree of swelling in electrolyte solution>

The degree of swelling in electrolyte solution of the particulate polymer (X) is preferably 120% or more, more preferably 130% or more, and even more preferably 140% or more, and is preferably 600% or less, more preferably 500% or less, and even more preferably 300% or less.

When the degree of swelling in electrolyte solution of the particulate polymer (X) is not less than any of the lower limits set forth above, adhesiveness (particularly wet adhesiveness) of a functional layer that is formed using the composition for a functional layer can be further improved because the particulate polymer (X) can suitably swell in electrolyte solution.

On the other hand, when the degree of swelling in electrolyte solution of the particulate polymer (X) is not more than any of the upper limits set forth above, output characteristics of an electrochemical device that includes a functional layer formed using the composition for a functional layer can be improved because excessive swelling of the particulate polymer (X) in electrolyte solution is inhibited, which makes it possible to avoid movement of ions being impaired.

### <Production method of particulate polymer (X)>

The particulate polymer (X) can be produced through polymerization of a monomer composition that contains the monomers described above, carried out in an aqueous solvent such as water, for example. The proportional content of each monomer in the monomer composition is normally the same as the proportional content of each monomer unit in the particulate polymer (X) unless otherwise specified.

The method of polymerization is not specifically limited and may be a suspension polymerization method, an emulsion polymerization and aggregation method, a pulverization method, or the like, for example. In particular, from a viewpoint of efficiently producing the particulate polymer (X), a suspension polymerization method and an emulsion polymerization and aggregation method are preferable, and a suspension polymerization method is more preferable. Moreover, the polymerization reaction can be a reaction such as radical polymerization or living radical polymerization.

Furthermore, other compounding agents such as chain transfer agents, polymerization modifiers, polymerization reaction retardants, reactive fluidizers, fillers, flame retardants, antioxidants, and colorants can be compounded in any amount in the monomer composition that is used to produce the particulate polymer (X).

The following describes a method of producing the particulate polymer (X) by suspension polymerization as one example.

### <<Production of particulate polymer (X) by suspension polymerization>>

### (1) Production of monomer composition

First, monomers that can form constituent monomer units of the target particulate polymer (X) and other compounding agents that are added as necessary are mixed so as to produce a monomer composition.

### (2) Formation of droplets

Next, the monomer composition is dispersed in water, a polymerization initiator is added, and then droplets of the monomer composition are formed. No specific limitations are placed on the method by which the droplets are formed. For example, the droplets can be formed by using a disperser such as an emulsifying/dispersing device to perform shear stirring of an aqueous medium that contains the monomer composition.

In a situation in which a disperser is used in droplet formation, the rotation speed of the disperser is preferably more than 8,000 rpm, more preferably 9,500 rpm or more, and even more preferably 11,000 rpm or more, and is preferably less than 15,000 rpm, more preferably 14,000 rpm or less, and even more preferably 13,000 rpm or less. When the rotation speed of the disperser is within any of the specific ranges set forth above, the volume-average particle diameter of the particulate polymer (X) can easily be adjusted.

The polymerization initiator may be an oil-soluble polymerization initiator such as t-butyl peroxy-2-ethylhexanoate or azobisisobutyronitrile. The polymerization initiator may be added before droplet formation once the monomer composition has been dispersed in water or may be added to the monomer composition before dispersion thereof in water.

From a viewpoint of stabilizing droplets of the monomer composition that are formed in the water, it is preferable that a dispersion stabilizer is added to the water and that droplets of the monomer composition are then formed. The dispersion stabilizer may be sodium dodecylbenzenesulfonate, a metal hydroxide such as magnesium hydroxide, or the like, for example.

### (3) Polymerization

Next, once droplets of the monomer composition have been formed, the water containing the formed droplets is heated to initiate polymerization and thereby form the particulate polymer (X) in the water. The reaction temperature in the polymerization is preferably not lower than 50°C and not higher than 95°C. Moreover, the reaction time in the polymerization is preferably not less than 1 hour and not more than 10 hours, and is preferably 8 hours or less, and more preferably 6 hours or less.

Note that a second monomer composition having a different chemical composition from the above-described monomer composition (hereinafter, referred to as a "first monomer composition") can be produced, and this second monomer composition can be added to the water containing droplets partway through the polymerization.

In a case in which a monomer that can form the reactive monomer unit A (hereinafter, referred to as a "reactive monomer A") is used in production of the particulate polymer (X), the proportional content of the reactive monomer A in the second monomer composition is preferably higher than the proportional content of the reactive monomer A in the first monomer composition. By setting the proportional content of the reactive monomer A in the second monomer composition as higher than the proportional content of the reactive monomer A in the first monomer composition, it is possible to suitably increase a ratio of the amount of the reactive monomer unit A that is present at the surfaces of particles of the particulate polymer (X) relative to the total amount of the reactive monomer unit A that is included in the entirety of particles of the particulate polymer (X) and to further improve adhesiveness of a functional layer that is formed using the composition for a functional layer.

Moreover, in a case in which a monomer that can form the reactive monomer unit B (hereinafter, referred to as a "reactive monomer B") is used in production of the particulate polymer (X), the proportional content of the reactive monomer B in the second monomer composition is preferably higher than the proportional content of the reactive monomer B in the first monomer composition. By setting the proportional content of the reactive monomer B in the second monomer composition as higher than the proportional content of the reactive monomer B in the first monomer composition, it is possible to suitably increase a ratio of the amount of the reactive monomer unit B that is present at the surfaces of particles of the particulate polymer (X) relative to the total amount of the reactive monomer unit B that is included in the entirety of particles of the particulate polymer (X) and to further improve adhesiveness of a functional layer that is formed using the composition for a functional layer.

Note that the proportional content of each monomer in the first monomer composition does not match the proportional content of each monomer unit in the particulate polymer (X) and that the proportional content of each monomer in the second monomer composition does not match the proportional content of each monomer unit in the particulate polymer (X). The proportional content of each monomer relative to the total amount of monomers in the first monomer composition and monomers in the second monomer composition is the same as the proportional content of each monomer unit in the particulate polymer (X).

### (4) Washing, filtration, dehydration, and drying step

Once the polymerization has ended, the particulate polymer (X) can be obtained by subjecting the water containing the particulate polymer (X) to washing, filtration, and drying by standard methods.

### <Particulate polymer (Y)>

The particulate polymer (Y) can function as a binder that binds together components contained in a functional layer, such as the particulate polymer (X) and non-conductive heat-resistant particles, and that prevents shedding of these components. Note that the particulate polymer (Y) may have a particulate form or may have any other form after members have been adhered to each other via a functional layer formed using the composition for a functional layer.

### <<Volume-average particle diameter>>

The volume-average particle diameter of the particulate polymer (Y) is smaller than the volume-average particle diameter of the particulate polymer (X).

Although no specific limitations are placed on the volume-average particle diameter of the particulate polymer (Y) so long as it is smaller than the volume-average particle diameter of the particulate polymer (X), the volume-average particle diameter of the particulate polymer (Y) is preferably 0.08 µm or more, more preferably 0.1 µm or more, and even more preferably 0.12 µm or more, and is preferably 0.5 µm or less, more preferably 0.45 µm or less, and even more preferably 0.4 µm or less.

When the volume-average particle diameter of the particulate polymer (Y) is not less than any of the lower limits set forth above, adhesiveness of a functional layer that is formed using the composition for a functional layer can be further improved because contact area with the particulate polymer (X) is sufficiently obtained.

On the other hand, when the volume-average particle diameter of the particulate polymer (Y) is not more than any of the upper limits set forth above, output characteristics of an electrochemical device that includes a functional layer formed using the composition for a functional layer can be improved because voids between components in the functional layer can be sufficiently ensured, air permeability of the functional layer can be increased, and ion conductivity of the functional layer can be improved.

Note that the volume-average particle diameter of the particulate polymer (Y) referred to in the present disclosure can be measured by a method described in the EXAMPLES section of the present specification.

### <<Chemical composition>>

The particulate polymer (Y) includes at least one among the reactive monomer unit A and the reactive monomer unit B described above.

### [Reactive monomer unit A]

The particulate polymer (Y) can include an epoxy group-containing monomer unit or a hydroxy group-containing monomer unit as the reactive monomer unit A. Moreover, in a case in which the particulate polymer (Y) includes the reactive monomer unit A, it is preferable that the particulate polymer (Y) includes an epoxy group-containing monomer unit as the reactive monomer unit A.

In a case in which the particulate polymer (Y) includes the reactive monomer unit A, the proportional content of the reactive monomer unit A in the particulate polymer (Y) when all monomer units in the particulate polymer (Y) are taken to be 100 mass% is preferably 0.5 mass% or more, more preferably 1 mass% or more, even more preferably 5 mass% or more, and further preferably 8 mass% or more, and is preferably 30 mass% or less, more preferably 28 mass% or less, even more preferably 27 mass% or less, and further preferably 26 mass% or less. When the proportional content of the reactive monomer unit A in the particulate polymer (Y) is not less than any of the lower limits set forth above, adhesiveness of a functional layer that is formed using the composition for a functional layer can be further improved because there is sufficient bond formation between the particulate polymer (X) and the particulate polymer (Y) through the reactive monomer unit A and the reactive monomer unit B. On the other hand, when the proportional content of the reactive monomer unit A in the particulate polymer (Y) is not more than any of the upper limits set forth above, stability during production of the particulate polymer (Y) can be improved.

Note that in a case in which the particulate polymer (Y) includes the reactive monomer unit A, the proportional content of the reactive monomer unit A in the particulate polymer (Y) when all monomer units in the particulate polymer (Y) are taken to be 100 mass% may be 10 mass% or more, may be 12 mass% or more, or may be 15 mass% or more, and may be 22 mass% or less, may be 18 mass% or less, may be 16 mass% or less, or may be 15 mass% or less.

### [Reactive monomer unit B]

The particulate polymer (Y) can include the reactive monomer unit B.

In a case in which the particulate polymer (Y) includes the reactive monomer unit B, the proportional content of the reactive monomer unit B in the particulate polymer (Y) when all monomer units in the particulate polymer (Y) are taken to be 100 mass% is preferably 0.5 mass% or more, more preferably 1 mass% or more, even more preferably 2 mass% or more, further preferably 3 mass% or more, and even further preferably 4 mass% or more, and is preferably 30 mass% or less, more preferably 20 mass% or less, even more preferably 15 mass% or less, further preferably 10 mass% or less, and even further preferably 8 mass% or less. When the proportional content of the reactive monomer unit B in the particulate polymer (Y) is not less than any of the lower limits set forth above, adhesiveness of a functional layer that is formed using the composition for a functional layer can be further improved because there is sufficient bond formation between the particulate polymer (X) and the particulate polymer (Y) through the reactive monomer unit A and the reactive monomer unit B. On the other hand, when the proportional content of the reactive monomer unit B in the particulate polymer (Y) is not more than any of the upper limits set forth above, stability during production of the particulate polymer (Y) can be improved.

### -Reactive monomer unit B1-

In a case in which the particulate polymer (X) includes an epoxy group-containing monomer unit as the reactive monomer unit A, the particulate polymer (Y) includes the reactive monomer unit B1 including one or more selected from the group consisting of a (meth)acrylamide group-containing monomer unit, an acid anhydride monomer unit, a sulfo group-containing monomer unit, a phosphate group-containing monomer unit, and an amino group-containing monomer unit as the reactive monomer unit B.

Note that the particulate polymer (Y) may include just one of the aforementioned types of monomer units as the reactive monomer unit B1 or may include two or more of the aforementioned types of monomer units in a freely selected ratio as the reactive monomer unit B1.

Moreover, it is preferable that the particulate polymer (Y) includes a (meth)acrylamide group-containing monomer unit as the reactive monomer unit B1.

Furthermore, the particulate polymer (Y) preferably further includes a carboxy group-containing monomer unit as the reactive monomer unit B1.

The proportional content of the reactive monomer unit B1 (i.e., the total proportional content of a (meth)acrylamide group-containing monomer unit, an acid anhydride monomer unit, a sulfo group-containing monomer unit, a phosphate group-containing monomer unit, an amino group-containing monomer unit, and a carboxy group-containing monomer unit) in the particulate polymer (Y) when all monomer units in the particulate polymer (Y) are taken to be 100 mass% is preferably 0.5 mass% or more, more preferably 1 mass% or more, even more preferably 2 mass% or more, further preferably 3 mass% or more, and even further preferably 4 mass% or more, and is preferably 30 mass% or less, more preferably 20 mass% or less, even more preferably 15 mass% or less, further preferably 10 mass% or less, and even further preferably 8 mass% or less. When the proportional content of the reactive monomer unit B1 in the particulate polymer (Y) is not less than any of the lower limits set forth above, adhesiveness of a functional layer that is formed using the composition for a functional layer can be further improved because there is sufficient bond formation between the particulate polymer (X) and the particulate polymer (Y) through the reactive monomer unit A and the reactive monomer unit B. On the other hand, when the proportional content of the reactive monomer unit B1 in the particulate polymer (Y) is not more than any of the upper limits set forth above, stability during production of the particulate polymer (Y) can be improved.

The proportional content of the reactive monomer unit B1 exclusive of a carboxy group-containing monomer unit (i.e., the total proportional content of a (meth)acrylamide group-containing monomer unit, an acid anhydride monomer unit, a sulfo group-containing monomer unit, a phosphate group-containing monomer unit, and an amino group-containing monomer unit) in the particulate polymer (Y) when all monomer units in the particulate polymer (Y) are taken to be 100 mass% is preferably 0.4 mass% or more, more preferably 0.8 mass% or more, even more preferably 1.5 mass% or more, further preferably 2.5 mass% or more, and even further preferably 3.5 mass% or more, and is preferably 20 mass% or less, more preferably 15 mass% or less, even more preferably 13 mass% or less, further preferably 8.5 mass% or less, and even further preferably 6.8 mass% or less. When the proportional content of the reactive monomer unit B1 exclusive of a carboxy group-containing monomer unit in the particulate polymer (Y) is not less than any of the lower limits set forth above, adhesiveness of a functional layer that is formed using the composition for a functional layer can be further improved because there is sufficient bond formation between the particulate polymer (X) and the particulate polymer (Y) through the reactive monomer unit A and the reactive monomer unit B. On the other hand, when the proportional content of the reactive monomer unit B1 exclusive of a carboxy group-containing monomer unit in the particulate polymer (Y) is not more than any of the upper limits set forth above, stability during production of the particulate polymer (Y) can be improved.

The proportional content of a carboxy group-containing monomer unit as the reactive monomer unit B1 in the particulate polymer (Y) when all monomer units in the particulate polymer (Y) are taken to be 100 mass% is preferably 0.1 mass% or more, more preferably 0.2 mass% or more, and even more preferably 0.5 mass% or more, and is preferably 10 mass% or less, more preferably 5 mass% or less, even more preferably 2 mass% or less, further preferably 1.5 mass% or less, and even further preferably 1.2 mass% or less. When the proportional content of a carboxy group-containing monomer unit as the reactive monomer unit B1 in the particulate polymer (Y) is within any of the specific ranges set forth above, adhesiveness of a functional layer that is formed using the composition for a functional layer can be further improved because there is sufficient bond formation between the particulate polymer (X) and the particulate polymer (Y) through the reactive monomer unit A and the reactive monomer unit B.

### -Reactive monomer unit B2-

In a case in which the particulate polymer (X) includes a hydroxy group-containing monomer unit as the reactive monomer unit A, the particulate polymer (Y) includes the reactive monomer unit B2 including one or more selected from the group consisting of a (meth)acrylamide group-containing monomer unit, a carboxy group-containing monomer unit, an acid anhydride monomer unit, a sulfo group-containing monomer unit, a phosphate group-containing monomer unit, and an epoxy group-containing monomer unit as the reactive monomer unit B.

Note that the particulate polymer (Y) may include just one of the aforementioned types of monomer units as the reactive monomer unit B2 or may include two or more of the aforementioned types of monomer units in a freely selected ratio as the reactive monomer unit B2.

Moreover, the particulate polymer (Y) preferably includes at least a (meth)acrylamide group-containing monomer unit, and more preferably includes a (meth)acrylamide group-containing monomer unit and a carboxy group-containing monomer unit as the reactive monomer unit B2.

The proportional content of the reactive monomer unit B2 (i.e., the total proportional content of a (meth)acrylamide group-containing monomer unit, a carboxy group-containing monomer unit, an acid anhydride monomer unit, a sulfo group-containing monomer unit, a phosphate group-containing monomer unit, and an epoxy group-containing monomer unit) in the particulate polymer (Y) is preferably 0.5 mass% or more, more preferably 1 mass% or more, even more preferably 2 mass% or more, further preferably 3 mass% or more, and even further preferably 4 mass% or more, and is preferably 30 mass% or less, more preferably 20 mass% or less, even more preferably 15 mass% or less, further preferably 10 mass% or less, and even further preferably 8 mass% or less. When the proportional content of the reactive monomer unit B2 in the particulate polymer (Y) is not less than any of the lower limits set forth above, adhesiveness of a functional layer that is formed using the composition for a functional layer can be further improved because there is sufficient bond formation between the particulate polymer (X) and the particulate polymer (Y) through the reactive monomer unit A and the reactive monomer unit B. On the other hand, when the proportional content of the reactive monomer unit B2 in the particulate polymer (Y) is not more than any of the upper limits set forth above, stability during production of the particulate polymer (Y) can be improved.

### [Other monomer units]

The particulate polymer (Y) can further include monomer units other than the reactive monomer unit A and the reactive monomer unit B described above (hereinafter, also referred to as "other monomer units").

Examples of other monomer units that can be included in the particulate polymer (Y) include an aromatic monovinyl monomer unit, a (meth)acrylic acid alkyl ester monomer unit, a nitrile group-containing monomer unit, a conjugated diene monomer unit, and a cross-linkable monomer unit.

Note that the particulate polymer (Y) may include just one of the aforementioned types of monomer units as another monomer unit or may include two or more of the aforementioned types of monomer units in a freely selected ratio as other monomer units.

Moreover, it is preferable that the particulate polymer (Y) includes either or both of an aromatic monovinyl monomer unit and a (meth)acrylic acid alkyl ester monomer unit as another monomer unit.

A particulate polymer (Y) that can suitably be used in the presently disclosed composition for a functional layer may include at least a (meth)acrylic acid alkyl ester monomer unit, a nitrile group-containing monomer unit, and a cross-linkable monomer unit as other monomer units, may include at least an aromatic monovinyl monomer unit, a (meth)acrylic acid alkyl ester monomer unit, and a cross-linkable monomer unit as other monomer units, or may include an aromatic monovinyl monomer unit and a conjugated diene monomer unit as other monomer units, for example.

Note that the particulate polymer (Y) may or may not include monomer units other than the aforementioned reactive monomer unit A, reactive monomer unit B, aromatic monovinyl monomer unit, (meth)acrylic acid alkyl ester monomer unit, nitrile group-containing monomer unit, conjugated diene monomer unit, and cross-linkable monomer unit without any specific limitations.

### -Aromatic monovinyl monomer unit-

Specific examples and preferable examples of aromatic monovinyl monomers that can form an aromatic monovinyl monomer unit in the particulate polymer (Y) are the same as specific examples and preferable examples of aromatic monovinyl monomers that can form an aromatic monovinyl monomer unit in the particulate polymer (X) described above.

The proportional content of an aromatic monovinyl monomer unit in the particulate polymer (Y) when all monomer units in the particulate polymer (Y) are taken to be 100 mass% is preferably 10 mass% or more, more preferably 15 mass% or more, and preferably 25 mass% or more, and is preferably 60 mass% or less, more preferably 50 mass% or less, and even more preferably 40 mass% or less.

When the proportional content of an aromatic monovinyl monomer unit in the particulate polymer (Y) is within any of the specific ranges set forth above, adhesiveness of a functional layer that is formed using the composition for a functional layer can be further improved.

### -(Meth)acrylic acid alkyl ester monomer unit-

Specific examples of (meth)acrylic acid alkyl ester monomers that can form a (meth)acrylic acid alkyl ester monomer unit in the particulate polymer (Y) are the same as specific examples of (meth)acrylic acid alkyl ester monomers that can form a (meth)acrylic acid alkyl ester monomer unit in the particulate polymer (X) described above.

In particular, n-butyl acrylate, 2-ethylhexyl acrylate, and methyl methacrylate are preferable, and n-butyl acrylate is more preferable as a (meth)acrylic acid alkyl ester monomer.

The proportional content of a (meth)acrylic acid alkyl ester monomer unit in the particulate polymer (Y) when all monomer units in the particulate polymer (Y) are taken to be 100 mass% is preferably 50 mass% or more, more preferably 55 mass% or more, and even more preferably 58 mass% or more, and is preferably 98 mass% or less, more preferably 97 mass% or less, and even more preferably 96 mass% or less.

When the proportional content of a (meth)acrylic acid alkyl ester monomer unit in the particulate polymer (Y) is within any of the specific ranges set forth above, adhesiveness of a functional layer that is formed using the composition for a functional layer can be further improved.

Note that the proportional content of a (meth)acrylic acid alkyl ester monomer unit in the particulate polymer (Y) may be 70 mass% or more, or may be 80 mass% or more, and may be 93 mass% or less, or may be 92 mass% or less.

### -Nitrile group-containing monomer unit-

Examples of nitrile group-containing monomers that can form a nitrile group-containing monomer unit include α,β-ethylenically unsaturated nitrile monomers. Specifically, any α,β-ethylenically unsaturated compound that includes a nitrile group can be used as an α,β-ethylenically unsaturated nitrile monomer without any specific limitations. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile.

In particular, acrylonitrile is preferable as a nitrile group-containing monomer.

Note that one of these nitrile group-containing monomers may be used individually, or two or more of these nitrile group-containing monomers may be used in combination in a freely selected ratio.

The proportional content of a nitrile group-containing monomer unit in the particulate polymer (Y) when all monomer units in the particulate polymer (Y) are taken to be 100 mass% is preferably 0.1 mass% or more, more preferably 0.5 mass% or more, and even more preferably 1 mass% or more, and is preferably 20 mass% or less, more preferably 15 mass% or less, and even more preferably 10 mass% or less.

When the proportional content of a nitrile group-containing monomer unit in the particulate polymer (Y) is within any of the specific ranges set forth above, adhesiveness of a functional layer that is formed using the composition for a functional layer can be further improved.

Note that the proportional content of a nitrile group-containing monomer unit in the particulate polymer (Y) when all monomer units in the particulate polymer (Y) are taken to be 100 mass% may be 2 mass% or more, may be 3 mass% or more, or may be 4 mass% or more, and may be 8 mass% or less, may be 6 mass% or less, or may be 4 mass% or less.

### -Conjugated diene monomer unit-

Examples of conjugated diene monomers that can form a conjugated diene monomer unit include aliphatic conjugated diene monomers such as 1,3-butadiene, 2-methyl-1,3-butadiene, 2,3-dimethyl-1,3-butadiene, and 2-chloro-1,3-butadiene.

In particular, 1,3-butadiene is preferable as a conjugated diene monomer.

Note that one of these conjugated diene monomers may be used individually, or two or more of these conjugated diene monomers may be used in combination in a freely selected ratio.

The proportional content of a conjugated diene monomer unit in the particulate polymer (Y) when all monomer units in the particulate polymer (Y) are taken to be 100 mass% is preferably 30 mass% or more, more preferably 40 mass% or more, and even more preferably 50 mass% or more, and is preferably 80 mass% or less, more preferably 75 mass% or less, and even more preferably 70 mass% or less.

When the proportional content of a conjugated diene monomer unit in the particulate polymer (Y) is within any of the specific ranges set forth above, adhesiveness of a functional layer that is formed using the composition for a functional layer can be further improved.

### -Cross-linkable monomer unit-

Specific examples and preferable examples of cross-linkable monomers that can form a cross-linkable monomer unit in the particulate polymer (Y) are the same as specific examples and preferable examples of cross-linkable monomers that can form a cross-linkable monomer unit in the particulate polymer (X) described above.

The proportional content of a cross-linkable monomer unit in the particulate polymer (Y) when all monomer units in the particulate polymer (Y) are taken to be 100 mass% is preferably 0.05 mass% or more, more preferably 0.1 mass% or more, and even more preferably 0.15 mass% or more, and is preferably 5 mass% or less, more preferably 3 mass% or less, and even more preferably 2 mass% or less.

When the proportional content of a cross-linkable monomer unit in the particulate polymer (Y) is within any of the specific ranges set forth above, adhesiveness of a functional layer that is formed using the composition for a functional layer can be further improved.

Note that the proportional content of a cross-linkable monomer unit in the particulate polymer (Y) when all monomer units in the particulate polymer (Y) are taken to be 100 mass% may be 0.2 mass% or more, may be 0.5 mass% or more, may be 1 mass% or more, or may be 1.5 mass% or more, and may be 1.5 mass% or less, may be 1 mass% or less, may be 0.5 mass% or less, or may be 0.2 mass% or less.

### <Glass-transition temperature>

The glass-transition temperature of the particulate polymer (Y) is preferably -100°C or higher, more preferably -90°C or higher, and even more preferably -80°C or higher, and is preferably lower than 30°C, more preferably 20°C or lower, and even more preferably 15°C or lower.

When the glass-transition temperature of the particulate polymer (Y) is not lower than any of the lower limits set forth above, adhesiveness of a functional layer that is formed using the composition for a functional layer can be further improved, and blocking resistance of the functional layer can also be improved.

On the other hand, when the glass-transition temperature of the particulate polymer (Y) is lower than or not higher than any of the upper limits set forth above, flexibility of a functional layer can be increased.

### <Production method of particulate polymer (Y)>

The particulate polymer (Y) can be produced through polymerization of a monomer composition that contains the monomers described above, carried out in an aqueous solvent such as water, for example. The proportional content of each monomer in the monomer composition is normally the same as the proportional content of each monomer unit in the particulate polymer (Y) unless otherwise specified.

Moreover, the polymerization method and the polymerization reaction can be any of the polymerization methods and polymerization reactions that were given for the production method of the particulate polymer (X) described above, for example, without any specific limitations.

### <Content of particulate polymer (Y)>

The content of the particulate polymer (Y) in the composition for a functional layer is preferably 10 parts by mass or more, more preferably 25 parts by mass or more, even more preferably 50 parts by mass or more, and further preferably 80 parts by mass or more per 100 parts by mass of the particulate polymer (X), and is preferably 200 parts by mass or less, more preferably 180 parts by mass or less, even more preferably 150 parts by mass or less, and further preferably 120 parts by mass or less per 100 parts by mass of the particulate polymer (X).

When the content of the particulate polymer (Y) is not less than any of the lower limits set forth above, adhesiveness of a functional layer that is formed using the composition for a functional layer can be further improved, and heat resistance of the functional layer can also be improved.

On the other hand, when the content of the particulate polymer (Y) is not more than any of the upper limits set forth above, output characteristics of an electrochemical device that includes a functional layer formed using the composition for a functional layer can be improved because voids between components in the functional layer can be sufficiently ensured, air permeability of the functional layer can be increased, and ion conductivity of the functional layer can be improved.

Note that from a viewpoint of even further improving adhesiveness of a functional layer that is formed using the composition for a functional layer and also further improving heat resistance of the functional layer, the content of the particulate polymer (Y) in the composition for a functional layer is even further preferably 95 parts by mass or more, yet further preferably 100 parts by mass or more, and particularly preferably 105 parts by mass or more per 100 parts by mass of the particulate polymer (X).

Moreover, from a viewpoint of further increasing air permeability of a functional layer that is formed using the composition for a functional layer and further improving output characteristics of an electrochemical device that includes the functional layer, the content of the particulate polymer (Y) in the composition for a functional layer is even further preferably 94 parts by mass or less, yet further preferably 90 parts by mass or less, and particularly preferably 80 parts by mass or less per 100 parts by mass of the particulate polymer (X).

In a case in which the composition for a functional layer contains subsequently described non-conductive heat-resistant particles, the content of the particulate polymer (Y) in the composition for a functional layer is preferably 0.5 parts by mass or more, more preferably 1 part by mass or more, even more preferably 2 parts by mass or more, and further preferably 2.5 parts by mass or more per 100 parts by mass of the non-conductive heat-resistant particles, and is preferably 6 parts by mass or less, more preferably 4.5 parts by mass or less, and even more preferably 4 parts by mass or less per 100 parts by mass of the non-conductive heat-resistant particles.

When the content of the particulate polymer (Y) is not less than any of the lower limits set forth above, adhesiveness of a functional layer that is formed using the composition for a functional layer can be further improved, and heat resistance of the functional layer can also be improved.

On the other hand, when the content of the particulate polymer (Y) is not more than any of the upper limits set forth above, output characteristics of an electrochemical device that includes a functional layer formed using the composition for a functional layer can be improved because voids between components in the functional layer can be sufficiently ensured, air permeability of the functional layer can be increased, and ion conductivity of the functional layer can be improved.

### <Non-conductive heat-resistant particles>

The presently disclosed composition for a functional layer preferably further contains non-conductive heat-resistant particles. When the composition for a functional layer further contains non-conductive heat-resistant particles, heat resistance of a functional layer can be improved by using the composition for a functional layer.

The term "non-conductive heat-resistant particles" as used in the present specification refers to fine particles that have a heat-resistance temperature of 200°C or higher and that are not electrically conductive. Moreover, the term "heat-resistance temperature" refers to a temperature at which substantial physical change such as thermal deformation does not occur.

Although no specific limitations are placed on the non-conductive heat-resistant particles so long as they are fine particles that have a heat-resistance temperature of 200°C or higher, are electrochemically stable, and are electrically insulating, the non-conductive heat-resistant particles are preferably inorganic particles.

Since inorganic particles have a comparatively large specific gravity, this makes it easier for the particulate polymer (X) to protrude relative to the inorganic particles at a thickness direction surface of a functional layer in a situation in which a functional layer is formed through application of the composition for a functional layer containing inorganic particles onto a substrate, for example, and, as a result, enables further improvement of adhesiveness of the functional layer.

The material of the inorganic particles is preferably an electrochemically stable material that is stably present in the environment of use of an electrochemical device. For example, the inorganic particles may be particles of an oxide such as aluminum oxide (alumina), hydrous aluminum oxide (boehmite (AlOOH)), gibbsite (Al(OH)₃), silicon oxide, magnesium oxide (magnesia), magnesium hydroxide, calcium oxide, titanium oxide (titania), barium titanate (BaTiO₃), zirconium oxide (ZrO), or alumina-silica complex oxide; particles of a nitride such as aluminum nitride or boron nitride; particles of covalently bonded crystals such as silicon or diamond; particles of sparingly soluble ionic crystals such as barium sulfate, calcium fluoride, or barium fluoride; or fine particles of clay such as talc or montmorillonite. Of these examples, aluminum oxide, hydrous aluminum oxide (boehmite), magnesium hydroxide, and barium sulfate are more preferable, and aluminum oxide is even more preferable. These particles may be subjected to element substitution, surface treatment, solid solution treatment, or the like as necessary.

Note that one of these types of inorganic particles may be used individually, or two or more of these types of inorganic particles may be used in combination in a freely selected ratio.

### <<Volume-average particle diameter of non-conductive heat-resistant particles>>

The volume-average particle diameter (D50) of the non-conductive heat-resistant particles is preferably 0.1 µm or more, more preferably 0.2 µm or more, and even more preferably 0.25 µm or more, and is preferably 1.5 µm or less, more preferably 1.0 µm or less, and even more preferably 1.0 µm or less.

When the volume-average particle diameter of the non-conductive heat-resistant particles is not less than any of the lower limits set forth above, excessively dense packing of the non-conductive heat-resistant particles in a functional layer formed using the composition for a functional layer can be inhibited. This makes it possible to increase air permeability and improve ion conductivity of the functional layer, and thus can improve output characteristics of an electrochemical device including the functional layer.

On the other hand, when the volume-average particle diameter of the non-conductive heat-resistant particles is not more than any of the upper limits set forth above, the non-conductive heat-resistant particles can pack with suitably high density in a functional layer formed using the composition for a functional layer. This makes it possible to cause the functional layer to display sufficient heat resistance even when the thickness of the functional layer is reduced. As a result, the thickness of an electrochemical device including the functional layer can be reduced while also increasing the capacity of the electrochemical device.

Note that the volume-average particle diameter of non-conductive heat-resistant particles referred to in the present disclosure can be measured by a method described in the EXAMPLES section of the present specification.

### <<Volume ratio of non-conductive heat-resistant particles and particulate polymer (X)>>

A volume ratio of the non-conductive heat-resistant particles and the particulate polymer (X) (non-conductive heat-resistant particles/particulate polymer (X)) in the composition for a functional layer is preferably 40/60 or more, more preferably 50/50 or more, even more preferably 60/40 or more, further preferably 70/30 or more, even further preferably 75/25 or more, yet further preferably 80/20 or more, and particularly preferably 85/15 or more, and is preferably 99/1 or less, more preferably 97/3 or less, even more preferably 95/5 or less, and further preferably 92/8 or less.

When the volume ratio of the non-conductive heat-resistant particles and the particulate polymer (X) (non-conductive heat-resistant particles/particulate polymer (X)) in the composition for a functional layer is not less than any of the lower limits set forth above, heat resistance of a functional layer that is formed using the composition for a functional layer can be improved because the non-conductive heat-resistant particles are sufficiently present in the functional layer.

On the other hand, when the volume ratio of the non-conductive heat-resistant particles and the particulate polymer (X) (non-conductive heat-resistant particles/particulate polymer (X)) in the composition for a functional layer is not more than any of the upper limits set forth above, adhesiveness of a functional layer that is formed using the composition for a functional layer can be further improved because the particulate polymer (X) is sufficiently present in the functional layer.

### <<Mass ratio of non-conductive heat-resistant particles and particulate polymer (X)>>

A mass ratio of the non-conductive heat-resistant particles and the particulate polymer (X) (non-conductive heat-resistant particles/particulate polymer (X)) in the composition for a functional layer is preferably 50/50 or more, more preferably 60/40 or more, even more preferably 70/30 or more, further preferably 80/20 or more, even further preferably 90/10 or more, and yet further preferably 95/5 or more, and is preferably 999/1 or less, more preferably 998/2 or less, even more preferably 995/5 or less, and further preferably 99/1 or less.

When the mass ratio of the non-conductive heat-resistant particles and the particulate polymer (X) (non-conductive heat-resistant particles/particulate polymer (X)) in the composition for a functional layer is not less than any of the lower limits set forth above, heat resistance of a functional layer that is formed using the composition for a functional layer can be improved because the non-conductive heat-resistant particles are sufficiently present in the functional layer.

On the other hand, when the mass ratio of the non-conductive heat-resistant particles and the particulate polymer (X) (non-conductive heat-resistant particles/particulate polymer (X)) in the composition for a functional layer is not more than any of the upper limits set forth above, adhesiveness of a functional layer that is formed using the composition for a functional layer can be further improved because the particulate polymer (X) is sufficiently present in the functional layer.

### <<Mass ratio of non-conductive heat-resistant particles and particulate polymers (X) and (Y)>>

A mass ratio of the content of the non-conductive heat-resistant particles and the total content of the particulate polymer (X) and the particulate polymer (Y) (non-conductive heat-resistant particles/particulate polymers (X) and (Y)) in the composition for a functional layer is preferably 40/60 or more, more preferably 50/50 or more, even more preferably 60/40 or more, further preferably 70/30 or more, even further preferably 85/15 or more, yet further preferably 90/10 or more, and particularly preferably 93/7 or more, and is preferably 999/1 or less, more preferably 998/2 or less, even more preferably 995/5 or less, and further preferably 99/1 or less.

When the mass ratio of the content of the non-conductive heat-resistant particles and the total content of the particulate polymer (X) and the particulate polymer (Y) (non-conductive heat-resistant particles/particulate polymers (X) and (Y)) in the composition for a functional layer is not less than any of the lower limits set forth above, heat resistance of a functional layer that is formed using the composition for a functional layer can be improved because the non-conductive heat-resistant particles are sufficiently present in the functional layer. Moreover, air permeability of a functional layer that is formed using the composition for a functional layer can be increased and ion conductivity of the functional layer can be improved as a result of the total content of the particulate polymer (X) and the particulate polymer (Y) being suitably low, which enables improvement of output characteristics of an electrochemical device including the functional layer.

On the other hand, when the mass ratio of the content of the non-conductive heat-resistant particles and the total content of the particulate polymer (X) and the particulate polymer (Y) (non-conductive heat-resistant particles/particulate polymers (X) and (Y)) in the composition for a functional layer is not more than any of the upper limits set forth above, adhesiveness of a functional layer that is formed using the composition for a functional layer can be further improved.

### <Amine compound>

The presently disclosed composition for a functional layer preferably further contains an amine compound. When the composition for a functional layer further contains an amine compound, preservation stability of the composition for a functional layer can be improved.

The amine compound is not specifically limited and may be hydroxylamine sulfate, diethylhydroxylamine, dimethylhydroxylamine, dipropylhydroxylamine, isopropylhydroxylamine, an isothiazoline compound, or the like, for example. Of these amine compounds, an isothiazoline compound is preferable because this enables further improvement of preservation stability of the composition for a functional layer. Note that the isothiazoline compound may be 1,2-benzo-4-isothiazolin-3-one, 2-methyl-4-isothiazolin-3-one, or the like, for example.

One of these amine compounds may be used individually, or two or more of these amine compounds may be used in combination in a freely selected ratio.

The content of the amine compound is preferably 0.3 parts by mass or more, and more preferably 0.5 parts by mass or more per 100 parts by mass of the particulate polymer (X), and is preferably 2 parts by mass or less, and more preferably 1 part by mass or less per 100 parts by mass of the particulate polymer (X).

### <Other components>

The composition for a functional layer may contain any other components besides the particulate polymer (X), the particulate polymer (Y), the non-conductive heat-resistant particles, and the amine compound. No specific limitations are placed on other components so long as they do not affect electrochemical reactions in an electrochemical device. For example, known additives such as dispersants, viscosity modifiers, and wetting agents may be used as other components. One of these other components may be used individually, or two or more of these other components may be used in combination.

### <Production method of composition for electrochemical device functional layer>

No specific limitations are placed on the method by which the composition for a functional layer is produced. For example, the composition for a functional layer can be produced by mixing the above-described particulate polymer (X), the above-described particulate polymer (Y), water serving as a dispersion medium, and the non-conductive heat-resistant particles, amine compound, and other components that are used as necessary. Note that in a case in which the particulate polymer (X) or the particulate polymer (Y) is produced through polymerization of a monomer composition in an aqueous solvent, the particulate polymer (X) or particulate polymer (Y) may be mixed with other components while still in the form of a water dispersion. Moreover, in a case in which the particulate polymer (X) or the particulate polymer (Y) is mixed in the form of a water dispersion, water in the water dispersion may be used as the dispersion medium.

Although no specific limitations are placed on the mixing method of these components, the mixing is preferably performed using a disperser as a mixing device in order to efficiently disperse the components. The disperser is preferably a device that can uniformly disperse and mix the components. Examples of dispersers that can be used include a ball mill, a sand mill, a pigment disperser, a grinding machine, an ultrasonic disperser, a homogenizer, and a planetary mixer.

### (Laminate for electrochemical device)

The presently disclosed laminate for an electrochemical device includes a substrate and a functional layer formed on the substrate, wherein the functional layer is obtained using the presently disclosed composition for an electrochemical device functional layer. Since the presently disclosed composition for an electrochemical device functional layer can form a functional layer having excellent adhesiveness, a laminate that includes a functional layer obtained using the presently disclosed composition for an electrochemical device functional layer can improve electrochemical characteristics (for example, output characteristics and cycle characteristics) of an electrochemical device that includes the laminate for an electrochemical device.

### <Substrate>

No specific limitations are placed on the substrate. For example, the substrate may be a separator substrate in a case in which the functional layer is used as a member that constitutes part of a separator and may be an electrode substrate obtained by forming an electrode mixed material layer on a current collector in a case in which the functional layer is used as a member that constitutes part of an electrode. No specific limitations are placed on how the laminate obtained by forming the functional layer on the substrate using the composition for a functional layer is used. For example, the functional layer may be formed on a separator substrate or the like, and then the resultant laminate may be used in that form as an electrochemical device member such as a separator, or the functional layer may be formed on an electrode substrate, and then the resultant laminate may be used in that form as an electrode.

### <<Separator substrate>>

The separator substrate on which the functional layer is formed is not specifically limited and can be any of those described in JP2012-204303A, for example. Of these separator substrates, a microporous membrane made of polyolefinic (polyethylene, polypropylene, polybutene, or polyvinyl chloride) resin is preferred because such a membrane can reduce the total thickness of a separator, which increases the ratio of electrode active material in an electrochemical device, and thereby increases the volumetric capacity of the electrochemical device. Note that the separator substrate may include any layer other than the functional layer that can display an expected function in part thereof.

### <<Electrode substrate>>

The electrode substrate (positive electrode substrate or negative electrode substrate) on which the functional layer is formed is not specifically limited and may be an electrode substrate that is obtained by forming an electrode mixed material layer on a current collector. The current collector, components in the electrode mixed material layer (for example, an electrode active material (positive electrode active material or negative electrode active material) and a binder for an electrode mixed material layer (binder for a positive electrode mixed material layer or binder for a negative electrode mixed material layer)), and the method by which the electrode mixed material layer is formed on the current collector can be known examples thereof such as any of those described in JP2013-145763A, for example. Note that the electrode substrate may include any layer other than the functional layer that has an expected function in part thereof.

### <Functional layer>

The functional layer can be formed on the above-described substrate using the presently disclosed composition for a functional layer. The functional layer contains at least the above-described particulate polymer (X) and particulate polymer (Y) and also contains the non-conductive heat-resistant particles, amine compound, and other components that are used as necessary. Note that components contained in the functional layer are components that were contained in the composition for a functional layer and that the preferred ratio of each component is the same as the preferred ratio of the component in the composition for a functional layer.

### <<Formation method of functional layer>>

Examples of methods by which the functional layer may be formed on the substrate using the composition for a functional layer include, but are not specifically limited to:
(1) a method in which the composition for a functional layer is applied onto the surface of the above-described substrate and is then dried;
(2) a method in which the above-described substrate is immersed in the composition for a functional layer and is then dried; and
(3) a method in which the composition for a functional layer is applied onto a releasable substrate and is dried to form a functional layer that is then transferred onto the surface of the above-described substrate.

Note that a functional layer may be formed on just one side of the substrate, or functional layers may be formed on both sides of the substrate.

A known releasable substrate can be used as the releasable substrate without any specific limitations.

Of these methods, method (1) is preferable due to ease of controlling the thickness of the functional layer. Moreover, method (1) may, for example, include a step of applying the composition for a functional layer onto the substrate (application step) and a step of drying the composition for a functional layer that has been applied onto the substrate to form a functional layer (functional layer formation step).

### -Application step-

Examples of methods by which the composition for a functional layer can be applied onto the substrate in the application step include, but are not specifically limited to, doctor blading, reverse roll coating, direct roll coating, gravure coating, extrusion coating, and brush coating.

### -Functional layer formation step-

The composition for a functional layer on the substrate can be dried by any commonly known method in the functional layer formation step without any specific limitations. For example, the drying method may be drying by warm, hot, or low-humidity air; drying in a vacuum; or drying by irradiation with infrared light, electron beams, or the like. Although no specific limitations are placed on the drying conditions, the drying temperature is preferably not lower than 50°C and not higher than 150°C, and the drying time is preferably not less than 1 minute and not more than 30 minutes.

The presently disclosed composition for a functional layer set forth above may be a first composition for a functional layer that contains the particulate polymer (X) and the particulate polymer (Y) but does not contain non-conductive heat-resistant particles or may be a second composition for a functional layer that further contains non-conductive heat-resistant particles in addition to the particulate polymer (X) and the particulate polymer (Y).

In a case in which the first composition for a functional layer is used to form a functional layer on a substrate, it is possible to obtain an adhesive layer as the functional layer.

Moreover, by further adding non-conductive heat-resistant particles to the first composition for a functional layer serving as a binder composition, it is possible to produce the second composition for a functional layer that further contains non-conductive heat-resistant particles.

Furthermore, in a case in which the second composition for a functional layer is used to form a functional layer on a substrate, it is possible to obtain, as the functional layer, a single layer (also referred to as a "heat-resistant adhesive layer") that can simultaneously display a function as a heat-resistant layer that increases heat resistance of the substrate and a function as an adhesive layer that strongly adheres members to each other.

A substrate (laminate) that includes a functional layer formed using the second composition for a functional layer as described above has high producibility because production with reduced man-hours and time is possible as compared to a conventional substrate that includes a heat-resistant layer and an adhesive layer.

A functional layer that is formed using the second composition for a functional layer containing non-conductive heat-resistant particles normally includes a layer formed of the non-conductive heat-resistant particles (hereinafter, referred to as a "non-conductive heat-resistant particle layer"). Moreover, the non-conductive heat-resistant particle layer normally has a plurality of the non-conductive heat-resistant particles stacked on one another in a thickness direction of the functional layer.

The thickness of the non-conductive heat-resistant particle layer is preferably 0.5 µm or more, more preferably 0.8 µm or more, and even more preferably 1 µm or more, and is preferably 6 µm or less, more preferably 5 µm or less, and even more preferably 4 µm or less.

When the thickness of the non-conductive heat-resistant particle layer is not less than any of the lower limits set forth above, the functional layer has extremely good heat resistance.

On the other hand, when the thickness of the non-conductive heat-resistant particle layer is not more than any of the upper limits set forth above, ion conductivity of the functional layer can be ensured, and output characteristics of an electrochemical device including the functional layer can be improved.

Note that the thickness of the non-conductive heat-resistant particle layer can be adjusted by altering application conditions in the previously described application step, for example.

### <<Ratio of volume-average particle diameter of particulate polymer (X) relative to thickness of non-conductive heat-resistant particle layer>>

A ratio of the volume-average particle diameter of the particulate polymer (X) relative to the thickness of the non-conductive heat-resistant particle layer (volume-average particle diameter of particulate polymer (X)/thickness of non-conductive heat-resistant particle layer) is preferably 0.8 or more, more preferably 1.2 or more, even more preferably 1.5 or more, and further preferably 1.8 or more, and is preferably 10 or less, more preferably 6 or less, even more preferably 4 or less, and further preferably 3.3 or less.

When the ratio of the volume-average particle diameter of the particulate polymer (X) relative to the thickness of the non-conductive heat-resistant particle layer is not less than any of the lower limits set forth above, this makes it easier for the particulate polymer (X) to protrude relative to the surface of the non-conductive heat-resistant particles at a thickness direction surface of the functional layer, and thus can further improve adhesiveness of the functional layer.

On the other hand, when the ratio of the volume-average particle diameter of the particulate polymer (X) relative to the thickness of the non-conductive heat-resistant particle layer is not more than any of the upper limits set forth above, shedding of the particulate polymer (X) during application of the composition for a functional layer onto the substrate can be inhibited, and a uniform functional layer can be formed.

### (Electrochemical device)

The presently disclosed electrochemical device includes the presently disclosed laminate for an electrochemical device. An electrochemical device such as set forth above can display excellent electrochemical characteristics (for example, output characteristics and cycle characteristics).

Note that the presently disclosed electrochemical device should include at least the presently disclosed laminate and thus may also include constituent elements other than the presently disclosed laminate so long as the effects according to the present disclosure are not noticeably lost.

The presently disclosed electrochemical device may be, but is not specifically limited to, a lithium ion secondary battery or an electric doublelayer capacitor, and is preferably a lithium ion secondary battery.

The following describes a lithium ion secondary battery as one example of the presently disclosed electrochemical device. A lithium ion secondary battery according to the present disclosure includes the presently disclosed laminate set forth above. More specifically, the lithium ion secondary battery includes a positive electrode, a negative electrode, a functional layer-equipped separator (presently disclosed laminate) in which a functional layer is formed on a separator substrate, and an electrolyte solution. A functional layer may be formed on just one side of the separator substrate, or functional layers may be formed on both sides of the separator substrate.

Note that although the functional layer is formed on the separator substrate in the following example, the functional layer may be formed on an electrode substrate.

In the lithium ion secondary battery according to the present disclosure, the functional layer enables strong adhesion between the positive electrode and the separator substrate and/or between the negative electrode and the separator substrate in the electrolyte solution. Consequently, widening of the distance between electrode plates of the electrodes in accompaniment to repeated charging and discharging is inhibited, and good battery characteristics such as cycle characteristics are obtained. Moreover, in a case in which the functional layer contains non-conductive heat-resistant particles, heat resistance of the separator in the lithium ion secondary battery can be improved through the functional layer. Furthermore, in a case in which a separator that includes a functional layer containing non-conductive heat-resistant particles is used, this lithium ion secondary battery requires less time for separator production and can be produced with high productivity as compared to a case in which a conventional separator including a heat-resistant layer and an adhesive layer is used.

Known positive electrodes, negative electrodes, and electrolyte solutions that are used in lithium ion secondary batteries can be used as the previously mentioned positive electrode, negative electrode, and electrolyte solution.

### <Positive electrode and negative electrode>

Specifically, the electrodes (positive electrode and negative electrode) can each be an electrode that is obtained by forming an electrode mixed material layer on a current collector. The current collector may be made of a metal material such as iron, copper, aluminum, nickel, stainless steel, titanium, tantalum, gold, or platinum. Of these metal materials, the current collector for the negative electrode is preferably made of copper. Moreover, the current collector for the positive electrode is preferably made of aluminum. The electrode mixed material layer can be a layer that contains an electrode active material and a binder.

### <Functional layer-equipped separator (laminate)>

The functional layer-equipped separator can be produced by, for example, forming a functional layer on a separator substrate using the method of forming a functional layer that was described above.

The separator substrate is not specifically limited and can be any of those described in JP2012-204303A, for example. Of these separator substrates, a microporous membrane made of polyolefinic resin (polyethylene, polypropylene, polybutene, or polyvinyl chloride) is preferred since such a membrane can reduce the total thickness of the functional layer-equipped separator, which increases the ratio of electrode active material in the lithium ion secondary battery, and thereby increases the volumetric capacity of the lithium ion secondary battery.

### <Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), methyl ethyl carbonate (ethyl methyl carbonate (EMC)), and vinylene carbonate; esters such as γ-butyrolactone and methyl formate; ethers such as 1,2-dimethoxyethane and tetrahydrofuran; and sulfur-containing compounds such as sulfolane and dimethyl sulfoxide.

Furthermore, a mixture of any of these organic solvents may be used. Of these organic solvents, carbonates are preferable due to having high permittivity and a wide stable potential region. In general, lithium ion conductivity tends to increase when an organic solvent having a low viscosity is used. Therefore, lithium ion conductivity can be adjusted through the type of organic solvent that is used.

The concentration of the electrolyte in the electrolyte solution can be adjusted as appropriate. Furthermore, known additives may be added to the electrolyte solution.

### <Production method of lithium ion secondary battery>

The lithium ion secondary battery that is an example of the presently disclosed electrochemical device can be produced by, for example, stacking the above-described positive electrode and negative electrode with the functional layer-equipped separator (presently disclosed laminate) in-between, performing rolling, folding, or the like of the resultant stack, as necessary, to place the stack in a battery container, injecting the electrolyte solution into the battery container, and sealing the battery container. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may be a coin type, a button type, a sheet type, a cylinder type, a prismatic type, a flat type, or the like, for example.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted in the polymer by a structural unit formed through polymerization of a given monomer is normally, unless otherwise specified, the same as the ratio (charging ratio) of the given monomer among all monomers used in polymerization for forming the polymer.

In the examples and comparative examples, methods described below were used for measurement of volume-average particle diameter, glass-transition temperature, degree of swelling in electrolyte solution, thickness of a non-conductive heat-resistant particle layer, ratio of volume-average particle diameter of a particulate polymer (X) relative to thickness of a non-conductive heat-resistant particle layer, and volume ratio of inorganic particles and a particulate polymer (X). Moreover, methods described below were used for measurement and evaluation of air permeability, heat resistance, dry adhesiveness, and wet adhesiveness of a functional layer, and output characteristics and cycle characteristics of a secondary battery.

### <Glass-transition temperature>

Particulate polymers (X) and particulate polymers (Y) produced in the examples and comparative examples were each taken as a measurement sample. The measurement sample was weighed into an aluminum pan in an amount of 10 mg and was measured by a differential scanning calorimeter (EXSTAR DSC6220 produced by SII NanoTechnology Inc.) under conditions prescribed in JIS Z8703 with a measurement temperature range of -100°C to 500°C and a heating rate of 10°C/min and with an empty aluminum pan as a reference to obtain a differential scanning calorimetry (DSC) curve. In this heating process, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as the glass-transition temperature (°C).

### <Volume-average particle diameter>

### <<Volume-average particle diameter of particulate polymer (X)>>

Particulate polymers (X) produced in the examples and comparative examples were each taken as a measurement sample. The measurement sample was weighed out in an amount equivalent to 0.1 g, was taken into a beaker, and 0.1 mL of alkylbenzenesulfonic acid aqueous solution (DRIWEL produced by FUJIFILM Corporation) as a dispersant was added thereto. In addition, 10 mL to 30 mL of a diluent (ISOTON II produced by Beckman Coulter, Inc.) was added into the beaker, and 3 minutes of dispersing was performed by an ultrasonic disperser 20 W (Watt). Thereafter, a particle size analyzer (Multisizer produced by Beckman Coulter, Inc.) was used to determine the volume-average particle diameter of the measurement sample under conditions of an aperture diameter of 20 µm, a medium of ISOTON II, and a measured particle count of 100,000.

### <<Volume-average particle diameter of particulate polymer (Y)>>

The volume-average particle diameter of each particulate polymer (Y) produced in the examples was measured by laser diffraction. Specifically, a produced water dispersion containing a binder (adjusted to a solid content concentration of 0.1 mass%) was used as a sample. In a particle diameter distribution (by volume) measured using a laser diffraction particle size analyzer (LS-230 produced by Beckman Coulter, Inc.), the particle diameter D50 at which cumulative volume calculated from a small diameter end of the distribution reached 50% was taken to be the volume-average particle diameter.

### <<Volume-average particle diameter of non-conductive heat-resistant particles>>

The volume-average particle diameter of non-conductive heat-resistant particles was taken to be the particle diameter (D50) at which, in a particle diameter distribution (by volume) measured by laser diffraction, cumulative volume calculated from a small diameter end of the distribution reached 50%.

### <Degree of swelling in electrolyte solution>

A water dispersion containing a particulate polymer (X) produced in each example or comparative example was loaded into a petri dish made of polytetrafluoroethylene and was dried under conditions of 48 hours at 25°C to prepare a powder. Approximately 0.2 g of the obtained powder was pressed at 200°C and 5 MPa for 2 minutes to obtain a film. The obtained film was cut to 1 cm-square to obtain a test specimen. The mass WO of the test specimen was measured.

Moreover, the test specimen described above was immersed in electrolyte solution at 60°C for 72 hours. Thereafter, the test specimen was withdrawn from the electrolyte solution, electrolyte solution on the surface of the test specimen was wiped off, and the mass W1 of the test specimen after the immersion test was measured.

The measured masses WO and W1 were used to calculate the degree of swelling in electrolyte solution S (×) by S = W1/WO.

Note that a solution obtained by dissolving LiPF₆ as a supporting electrolyte with a concentration of 1 mol/L in a mixed solvent of ethylene carbonate (EC), diethyl carbonate (DEC), and vinylene carbonate (VC) (volume ratio: EC/DEC/VC = 68.5/30/1.5) was used as the electrolyte solution.

### <Thickness of non-conductive heat-resistant particle layer>

The thickness of a non-conductive heat-resistant particle layer was calculated from an SEM image obtained by observing a cross-section of a functional layer-equipped separator using a field emission scanning electron microscope (FE-SEM). Note that the thickness of the non-conductive heat-resistant particle layer was taken to be the distance from the surface of a separator substrate where a slurry composition had been applied to a non-conductive heat-resistant particle furthest separated therefrom in a perpendicular direction.

### <Ratio of volume-average particle diameter of particulate polymer (X) relative to thickness of non-conductive heat-resistant particle layer>

A ratio of the volume-average particle diameter of a particulate polymer (X) relative to the thickness of a non-conductive heat-resistant particle layer (volume-average particle diameter of particulate polymer (X)/thickness of non-conductive heat-resistant particle layer) was calculated based on the volume-average particle diameter of the particulate polymer (X) and the thickness of the non-conductive heat-resistant particle layer that were determined as described above.

### <Mixing ratio of inorganic particles and particulate polymer (X)>

A mixing ratio (volume ratio) of non-conductive heat-resistant particles (alumina) and a particulate polymer (X) was calculated from charged amounts of the non-conductive heat-resistant particles (alumina) and the particulate polymer (X) in production of a slurry composition. Note that the density of alumina was taken to be 4 g/cm³, the density of magnesium hydroxide was taken to be 2.4 g/cm³, and the density of the particulate polymer (X) was taken to be 4.5 g/cm³ in this calculation.

### <Air permeability of functional layer>

A Digital Oken Type Air-Permeability and Smoothness Tester (EYO-5-1M-R produced by Asahi Seiko Co., Ltd.) was used to measure Gurley values (s/100 cc) of a separator substrate that was used in production of a separator and a produced functional layer-equipped separator (laminate). Specifically, a Gurley value increase ΔG (= G1 - G0) was determined from the Gurley value G0 of the "separator substrate" and the Gurley value G1 of the "functional layer-equipped separator" and was evaluated by the following standard. A smaller Gurley value increase ΔG indicates that the functional layer has higher air permeability and better ion conductivity.
A: Gurley value increase of less than 20 s/100 cc
B: Gurley value increase of not less than 20 s/100 cc and less than 40 s/100 cc
C: Gurley value increase of 40 s/100 cc or more

### <Heat resistance of functional layer>

A functional layer-equipped separator produced in each example or comparative example was cut out as a square of 12 cm TD (width direction) × 12 cm MD (length direction), and then a cross was drawn at the center of the square by drawing lines of 10 cm in length in the TD and MD so as to obtain a test specimen. The test specimen was placed in a 150°C constant-temperature tank and was left for 1 hour. Thereafter, {(length of line before being left (10 cm) - length of line after being left)/(length of line before being left (10 cm))} × 100[%] was calculated with respect to each of the lines drawn in the TD and MD as a heat shrinkage rate and was evaluated by the following standard. A smaller heat shrinkage rate indicates that the functional layer has better heat resistance.
A: Heat shrinkage rate of less than 3%
B: Heat shrinkage rate of not less than 3% and less than 5%
C: Heat shrinkage rate of 5% or more

### <Adhesiveness before immersion in electrolyte solution (dry adhesiveness>>

A negative electrode and a functional layer-equipped separator (including functional layers at both sides) produced in each example or comparative example were each cut out as 10 mm in width and 50 mm in length. The negative electrode and the separator were stacked and were pressed by a flat-plate press with a temperature of 80°C and a load of 1 kN for 10 seconds to obtain a test specimen. This test specimen was placed with the surface at the current collector-side of the negative electrode facing downward, and cellophane tape was affixed to the surface of the electrode. Tape prescribed by JIS Z1522 was used as the cellophane tape. Moreover, the cellophane tape was fixed to a horizontal test stage in advance. The stress when the separator was peeled off by pulling one end of the separator vertically upward at a pulling speed of 50 mm/min was measured. The stress was measured three times in total. An average value of the three obtained stress values was determined as the peel strength (N/m) and was evaluated by the following standard as the adhesiveness (dry adhesiveness) between an electrode and a separator via a functional layer. A larger peel strength indicates better dry adhesiveness.
A+: Peel strength of 7.0 N/m or more
A: Peel strength of not less than 5.0 N/m and less than 7.0 N/m
B: Peel strength of not less than 3.0 N/m and less than 5.0 N/m
C: Peel strength of not less than 1.0 N/m and less than 3.0 N/m
D: Peel strength of less than 1.0 N/m

### <Adhesiveness after immersion in electrolyte solution (wet adhesiveness)>

A positive electrode and a functional layer-equipped separator (including functional layers at both sides) produced in each example or comparative example were each cut to 50 mm in length and 10 mm in width. The cut positive electrode and separator were then overlapped and stacked. The resultant laminate was pressed at a pressing rate of 30 m/min by roll pressing with a temperature of 25°C and a load of 10 kN/m to obtain a test specimen. This test specimen was then immersed in electrolyte solution having a temperature of 60°C for 72 hours. The electrolyte solution was a solution containing LiPF₆ as a supporting electrolyte with a concentration of 1 M in a mixed solvent of ethylene carbonate (EC) and diethyl carbonate (DEC) (volume mixing ratio: EC/DEC = 1/2). After this immersion, the test specimen was removed from the electrolyte solution, and electrolyte solution on the surface of the test specimen was wiped off. The test specimen was pressed once again under conditions of 2 minutes at 1 MPa and 50°C. The re-pressed test specimen was placed with the surface at the current collector-side of the positive electrode facing downward, and cellophane tape (tape prescribed by JIS Z1522) was affixed to the surface of the positive electrode. Note that the cellophane tape was fixed to a horizontal test stage in advance. The stress when the separator was peeled off by pulling one end of the separator vertically upward at a pulling speed of 50 mm/min was measured. A total of three measurements were made in this manner. Separately to the above, a laminate of a negative electrode and a separator was obtained, and this laminate was pressed to obtain a test specimen in the same manner as described above. Moreover, in the same manner as when the positive electrode was used, a re-pressed test specimen was obtained, and the stress after immersion in electrolyte solution was measured a total of three times.

An average value of the stress measured a total of six times using the positive electrode and the negative electrode was determined as the peel strength (N/m) and was evaluated by the following standard as the adhesiveness (wet adhesiveness) between an electrode and a separator via a functional layer after immersion in electrolyte solution. A larger peel strength indicates better wet adhesiveness.
A+: Peel strength of 4.0 N/m or more
A: Peel strength of not less than 3.0 N/m and less than 4.0 N/m
B: Peel strength of not less than 2.0 N/m and less than 3.0 N/m
C: Peel strength of not less than 1.0 N/m and less than 2.0 N/m
D: Peel strength of less than 1.0 N/m

### <Output characteristics of secondary battery>

A lithium ion secondary battery produced in each example or comparative example was constant-current constant-voltage (CCCV) charged to 4.3 V in an atmosphere having a temperature of 25°C for cell preparation. The prepared cell was discharged to 3.0 V by 0.2C and 1.5C constant-current methods, and the electric capacity was determined. A discharge capacity maintenance rate expressed by the ratio of the electric capacities (= (electric capacity at 1.5C/electric capacity at 0.2C) × 100(%)) was calculated. This measurement was performed for 5 lithium ion secondary battery cells. An average value of the discharge capacity maintenance rates of the cells was calculated and was evaluated by the following standard. A larger value for the discharge capacity maintenance rate indicates that the secondary battery has better output characteristics.
A: Average value for discharge capacity maintenance rate of 90% or more
B: Average value for discharge capacity maintenance rate of not less than 85% and less than 90%
C: Average value for discharge capacity maintenance rate of less than 85%

### <Cycle characteristics of secondary battery>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, CC-CV charging (upper limit cell voltage 4.20 V) was performed by a 0.2C constant-current method and CC discharging was performed to 3.00 V by a 0.2C constant-current method. This charging and discharging at 0.2C was repeated three times.

Thereafter, the lithium ion secondary battery was subjected to 200 cycles of a charge/discharge operation with a cell voltage of 4.20 V to 3.00 V and a charge/discharge rate of 1.0C in an environment having a temperature of 25°C. The discharge capacity of the 1^{st} cycle was defined as X1 and the discharge capacity of the 200^{th} cycle was defined as X2.

The discharge capacity X1 and the discharge capacity X2 were used to calculate a capacity maintenance rate ΔC' (ΔC' = (X2/X1) × 100(%)), which was then evaluated by the following standard. A larger value for the capacity maintenance rate ΔC' indicates that the secondary battery has better cycle characteristics.
A: Capacity maintenance rate ΔC' of 93% or more
B: Capacity maintenance rate ΔC' of not less than 90% and less than 93%
C: Capacity maintenance rate ΔC' of not less than 87% and less than 90%
D: Capacity maintenance rate ΔC' of less than 87%

### (Example 1)

### <Production of particulate polymer (X1)>

### [Production of monomer composition (X1)]

A monomer composition (X1) was produced by mixing 61.8 parts of styrene as an aromatic monovinyl monomer, 13 parts of 2-ethylhexyl acrylate as a (meth)acrylic acid alkyl ester monomer, 25 parts of glycidyl methacrylate as a reactive monomer A, and 0.2 parts of ethylene glycol dimethacrylate as a cross-linkable monomer.

### [Production of metal hydroxide]

A colloidal dispersion liquid (X1) containing magnesium hydroxide as a metal hydroxide was produced by gradually adding an aqueous solution of 7.0 parts of sodium hydroxide dissolved in 50 parts of deionized water to an aqueous solution of 10.0 parts of magnesium chloride dissolved in 200 parts of deionized water under stirring.

### [Suspension polymerization]

A particulate polymer (X1) was produced by suspension polymerization as a particulate polymer (X). Specifically, the monomer composition (X1) obtained as described above was added to the colloidal dispersion liquid (X1) containing magnesium hydroxide, was further stirred therewith, and then 3.0 parts of t-butyl peroxy-2-ethylhexanoate (PERBUTYL O produced by NOF Corporation) was added as a polymerization initiator to yield a mixture. The obtained mixture was subjected to 1 minute of high-shear stirring at a rotation speed of 12,000 rpm using an inline emulsifying/dispersing device (CAVITRON produced by Pacific Machinery & Engineering Co., Ltd.) so as to form droplets of the monomer composition (X1) in the colloidal dispersion liquid containing magnesium hydroxide.

The magnesium hydroxide-containing colloidal dispersion liquid in which droplets of the monomer composition (X1) had been formed was loaded into a reactor, the temperature was raised to 90°C, and a polymerization reaction was performed for 5 hours. The resultant dispersion liquid was subjected to 2 hours of treatment under reduced pressure at 90°C using an evaporator to perform purification and yield a water dispersion containing the particulate polymer (X1).

In addition, the water dispersion containing the particulate polymer (X1) was stirred while sulfuric acid was added dropwise at room temperature (25°C) so as to perform acid washing until the pH reached 6.5 or lower. Next, separation was performed by filtration, a slurry was reformed through addition of 500 parts of deionized water to the resultant solid content, and water washing treatment (washing, filtration, and dehydration) was repeated 10 times. Thereafter, separation was performed by filtration to obtain solid content that was then loaded into a vessel of a dryer and was dried at 40°C for 48 hours to obtain a dried particulate polymer (X1).

The glass-transition temperature and volume-average particle diameter of the obtained particulate polymer (X1) were measured. The results are shown in Table 1.

### <Production of water dispersion containing particulate polymer (Y)>

A particulate polymer (Y1) was produced as a particulate polymer (Y) as described below.

A reactor including a stirrer was supplied with 70 parts of deionized water, 0.15 parts of sodium lauryl sulfate (EMAL^{®} 2F (EMAL is a registered trademark in Japan, other countries, or both) produced by Kao Corporation) as an emulsifier, and 0.5 parts of ammonium persulfate as a polymerization initiator. The gas phase was purged with nitrogen gas, and the temperature was raised to 60°C.

Meanwhile, a monomer composition (Y1) was produced in a separate vessel by mixing 50 parts of deionized water, 1.0 parts of sodium dodecylbenzenesulfonate as a dispersion stabilizer, 90 parts of n-butyl acrylate as a (meth)acrylic acid alkyl ester monomer, 5 parts of acrylonitrile as a nitrile group-containing monomer, 4 parts of acrylamide and 0.8 parts of methacrylic acid as reactive monomers B, and 0.2 parts of allyl methacrylate as a cross-linkable monomer.

The obtained monomer composition (Y1) was continuously added into the above-described reactor including a stirrer over 4 hours to perform polymerization. The reaction was carried out at 60°C during the addition. Once the addition was complete, a further 3 hours of stirring was performed at 70°C, and then the reaction was ended to yield a water dispersion containing the particulate polymer (Y1) as an acrylic polymer. The obtained particulate polymer (Y1) had a volume-average particle diameter of 0.15 µm and a glass-transition temperature of -40°C.

### <Production of composition for functional layer>

A binder composition was obtained by adding 0.2 parts of sodium dodecylbenzenesulfonate (NEOPELEX G-15 produced by Kao Corporation) as an emulsifier, 1.5 parts of carboxymethyl cellulose as a thickener, and 0.5 parts of 1,2-benzo-4-isothiazolin-3-one as an amine compound to 100 parts of the particulate polymer (X1), and then further adding and mixing 108 parts in terms of solid content of the water dispersion containing the particulate polymer (Y1).

A mixture obtained by adding 0.5 parts of polyacrylic acid as a dispersant to 100 parts of alumina (AKP3000 produced by Sumitomo Chemical Co., Ltd.; volume-average particle diameter: 0.7 µm) as non-conductive heat-resistant particles, further adding deionized water to adjust the solid content concentration to 55%, and mixing these materials using a ball mill was added to the binder composition that was obtained as described above. Moreover, deionized water was added so as to adjust the solid content concentration to 40% and thereby obtain a slurry composition as a composition for a functional layer. Note that in addition of the mixture to the binder composition, the mixing ratio of the non-conductive heat-resistant particles and the particulate polymer (X1) in the resultant slurry composition was adjusted to 90: 10 as a volume ratio (non-conductive heat-resistant particles:particulate polymer (X1)). Moreover, the mixing ratio of the non-conductive heat-resistant particles and the particulate polymer (X1) in the slurry composition was adjusted to 360: 10 as a mass ratio (non-conductive heat-resistant particles:particulate polymer (X1)).

### <Production of functional layer-equipped separator (laminate)>

A microporous membrane made of polyethylene (thickness: 12 µm) was prepared as a separator substrate. The slurry composition obtained as described above was applied onto one side of the separator substrate by bar coating. Next, the separator substrate with the slurry composition applied thereon was dried at 50°C for 1 minute to form a functional layer. The same operations were performed with respect to the other side of the separator substrate to produce a functional layer-equipped separator (laminate) that included functional layers of 2.0 µm each in thickness at both sides of the separator substrate.

Moreover, the obtained functional layer-equipped separator was used to evaluate air permeability and heat resistance of a functional layer. The results are shown in Table 1.

### <Production of positive electrode>

A slurry composition for a positive electrode was produced by mixing 100 parts of LiCoO₂ (volume-average particle diameter: 12 µm) as a positive electrode active material, 2 parts of acetylene black (HS-100 produced by Denka Company Limited) as a conductive material, 2 parts in terms of solid content of polyvinylidene fluoride (#7208 produced by Kureha Corporation) as a binder for a positive electrode mixed material layer, and N-methylpyrrolidone as a solvent, adjusting the total solid content concentration to 70%, and mixing these materials in a planetary mixer.

The slurry composition for a positive electrode was applied onto aluminum foil of 20 µm in thickness serving as a current collector by a comma coater such as to have a thickness after drying of approximately 150 µm. The applied slurry composition was dried by conveying the aluminum foil inside a 60°C oven for 2 minutes at a speed of 0.5 m/min. Thereafter, 2 minutes of heat treatment was performed at 120°C to obtain a pre-pressing positive electrode web. The pre-pressing positive electrode web was rolled by roll pressing to obtain a post-pressing positive electrode including a positive electrode mixed material layer (thickness: 60 µm).

### <Production of negative electrode>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the reaction to yield a mixture containing a binder (SBR) for a negative electrode mixed material layer. The mixture containing the binder for a negative electrode mixed material layer was adjusted to pH 8 through addition of 5% sodium hydroxide aqueous solution and was subsequently subjected to thermal-vacuum distillation to remove unreacted monomer. Thereafter, the mixture was cooled to 30°C or lower to yield a water dispersion containing the target binder for a negative electrode mixed material layer.

After compounding 80 parts of artificial graphite (volume-average particle diameter: 15.6 µm) as a negative electrode active material (1) and 16 parts of a silicon-based active material SiOₓ (volume-average particle diameter: 4.9 µm) as a negative electrode active material (2), and mixing 2.5 parts in terms of solid content of a 2% aqueous solution of carboxymethyl cellulose sodium salt (MAC350HC produced by Nippon Paper Industries Co., Ltd.) as a viscosity modifier and deionized water therewith so as to adjust the solid content concentration to 68%, these materials were mixed at 25°C for 60 minutes. The solid content concentration was further adjusted to 62% with deionized water, and then a further 15 minutes of mixing was performed at 25°C to obtain a mixture. Deionized water and 1.5 parts in terms of solid content of the water dispersion containing the binder for a negative electrode mixed material layer were added to this mixture, the final solid content concentration was adjusted to 52%, and a further 10 minutes of mixing was performed to yield a mixture. This mixture was subjected to defoaming under reduced pressure to yield a slurry composition for a negative electrode having good fluidity.

The slurry composition for a negative electrode was applied onto copper foil of 20 µm in thickness serving as a current collector by a comma coater such as to have a thickness after drying of approximately 150 µm. The applied slurry composition was dried by conveying the copper foil inside a 60°C oven for 2 minutes at a speed of 0.5 m/min. Thereafter, 2 minutes of heat treatment was performed at 120°C to obtain a pre-pressing negative electrode web. The pre-pressing negative electrode web was rolled by roll pressing to obtain a post-pressing negative electrode including a negative electrode mixed material layer (thickness: 80 µm).

The functional layer-equipped separator, positive electrode, and negative electrode obtained as described above were used to evaluate dry adhesiveness and wet adhesiveness. The results are shown in Table 1.

### <Production of lithium ion secondary battery>

The post-pressing positive electrode produced as described above was cut out as a rectangle of 49 cm × 5 cm and was placed with the surface at the positive electrode mixed material layer-side facing upward. The functional layer-equipped separator was cut out as 120 cm × 5.5 cm and was arranged on the positive electrode mixed material layer such that the positive electrode was positioned at one longitudinal direction side of the functional layer-equipped separator. In addition, the post-pressing negative electrode produced as described above was cut out as a rectangle of 50 cm × 5.2 cm and was arranged on the functional layer-equipped separator such that the surface at the negative electrode mixed material layer-side thereof was facing toward the functional layer-equipped separator and such that the negative electrode was positioned at the other longitudinal direction side of the functional layer-equipped separator. The resultant product was wound up using a roll to obtain a roll. This roll was pressed at 70°C and 1 MPa to obtain a flattened roll, was subsequently enclosed in an aluminum packing case serving as a battery case, and then electrolyte solution (solvent: ethylene carbonate/diethyl carbonate/vinylene carbonate (volume ratio) = 68.5/30/1.5; electrolyte: LiPF₆ of 1 M in concentration) was injected such that no air remained. An opening of the aluminum packing case was closed by heat sealing at a temperature of 150°C to produce a wound lithium ion secondary battery having a capacity of 800 mAh.

The obtained lithium ion secondary battery was used to evaluate cycle characteristics and output characteristics of the secondary battery. The results are shown in Table 1.

### (Example 2)

Various operations, measurements, and evaluations were performed in the same way as in Example 1 with the exception that a particulate polymer (X2) produced as described below was used instead of the particulate polymer (X1) as a particulate polymer (X) in production of the composition for a functional layer (slurry composition). The results are shown in Table 1.

### <Production of particulate polymer (X2)>

The particulate polymer (X2) was produced by performing operations in the same way as in production of the particulate polymer (X1) of Example 1 with the exception that a monomer composition (X2) was used instead of the monomer composition (X1).

### [Production of monomer composition (X2)]

The monomer composition (X2) was produced by mixing 66.8 parts of styrene as an aromatic monovinyl monomer, 23 parts of 2-ethylhexyl acrylate as a (meth)acrylic acid alkyl ester monomer, 10 parts of glycidyl methacrylate as a reactive monomer A, and 0.2 parts of ethylene glycol dimethacrylate as a cross-linkable monomer.

### (Example 3)

Various operations, measurements, and evaluations were performed in the same way as in Example 1 with the exception that a particulate polymer (X3) produced as described below was used instead of the particulate polymer (X1) as a particulate polymer (X) in production of the composition for a functional layer (slurry composition). The results are shown in Table 1.

### <Production of particulate polymer (X3)>

The particulate polymer (X3) was produced by performing operations in the same way as in production of the particulate polymer (X1) of Example 1 with the exception that a monomer composition (X3) was used instead of the monomer composition (X1).

### [Production of monomer composition (X3)]

The monomer composition (X3) was produced by mixing 71.8 parts of styrene as an aromatic monovinyl monomer, 26 parts of 2-ethylhexyl acrylate as a (meth)acrylic acid alkyl ester monomer, 2 parts of glycidyl methacrylate as a reactive monomer A, and 0.2 parts of ethylene glycol dimethacrylate as a cross-linkable monomer.

### (Example 4)

Various operations, measurements, and evaluations were performed in the same way as in Example 1 with the exception that a particulate polymer (Y2) produced as described below was used instead of the particulate polymer (Y1) as a particulate polymer (Y) in production of the composition for a functional layer (slurry composition). The results are shown in Table 1.

### <Production of water dispersion containing particulate polymer (Y2)>

A water dispersion containing the particulate polymer (Y2) was produced by performing operations in the same way as in production of the water dispersion containing the particulate polymer (Y1) of Example 1 with the exception that a monomer composition (Y2) was used instead of the monomer composition (Y1).

### [Production of monomer composition (Y2)]

The monomer composition (Y2) was produced by mixing 50 parts of deionized water, 1.0 parts of sodium dodecylbenzenesulfonate as a dispersion stabilizer, 94 parts of n-butyl acrylate as a (meth)acrylic acid alkyl ester monomer, 1 part of N-isopropylacrylamide and 1 part of methacrylic acid as reactive monomers B, 2 parts of acrylonitrile as a nitrile group-containing monomer, and 2 parts of allyl methacrylate as a cross-linkable monomer.

### (Example 5)

Various operations, measurements, and evaluations were performed in the same way as in Example 1 with the exception that a particulate polymer (Y3) produced as described below was used instead of the particulate polymer (Y1) as a particulate polymer (Y) in production of the slurry composition for a functional layer. The results are shown in Table 1.

### <Production of water dispersion containing particulate polymer (Y3)>

A water dispersion containing the particulate polymer (Y3) was produced by performing operations in the same way as in production of the water dispersion containing the particulate polymer (Y1) of Example 1 with the exception that a monomer composition (Y3) was used instead of the monomer composition (Y1).

### [Production of monomer composition (Y3)]

The monomer composition (Y3) was produced by mixing 50 parts of deionized water, 1.0 parts of sodium dodecylbenzenesulfonate as a dispersion stabilizer, 94 parts of n-butyl acrylate as a (meth)acrylic acid alkyl ester monomer, 1 part of maleic anhydride and 1 part of methacrylic acid as reactive monomers B, 2 parts of acrylonitrile as a nitrile group-containing monomer, and 2 parts of allyl methacrylate as a cross-linkable monomer.

### (Example 6)

Various operations, measurements, and evaluations were performed in the same way as in Example 1 with the exception that a particulate polymer (Y4) produced as described below was used instead of the particulate polymer (Y1) as a particulate polymer (Y) in production of the composition for a functional layer (slurry composition). The results are shown in Table 1.

### <Production of water dispersion containing particulate polymer (Y4)>

A water dispersion containing the particulate polymer (Y4) was produced by performing operations in the same way as in production of the water dispersion containing the particulate polymer (Y1) of Example 1 with the exception that a monomer composition (Y4) was used instead of the monomer composition (Y1).

### [Production of monomer composition (Y4)]

The monomer composition (Y4) was produced by mixing 50 parts of deionized water, 1.0 parts of sodium dodecylbenzenesulfonate as a dispersion stabilizer, 94 parts of n-butyl acrylate as a (meth)acrylic acid alkyl ester monomer, 1 part of N-methylolacrylamide and 1 part of methacrylic acid as reactive monomers B, 2 parts of acrylonitrile as a nitrile group-containing monomer, and 2 parts of allyl methacrylate as a cross-linkable monomer.

### (Example 7)

Various operations, measurements, and evaluations were performed in the same way as in Example 1 with the exception that a particulate polymer (X4) produced as described below was used instead of the particulate polymer (X1) as a particulate polymer (X) in production of the composition for a functional layer (slurry composition). The results are shown in Table 2.

### <Production of particulate polymer (X4)>

The particulate polymer (X4) was produced by performing operations in the same way as in production of the particulate polymer (X1) of Example 1 with the exception that a monomer composition (X4) was used instead of the monomer composition (X1).

### [Production of monomer composition (X4)]

The monomer composition (X4) was produced by mixing 70.8 parts of styrene as an aromatic monovinyl monomer, 19 parts of 2-ethylhexyl acrylate as a (meth)acrylic acid alkyl ester monomer, 10 parts of 4-hydroxybutyl acrylate as a reactive monomer A, and 0.2 parts of ethylene glycol dimethacrylate as a cross-linkable monomer.

### (Example 8)

Various operations, measurements, and evaluations were performed in the same way as in Example 1 with the exception that a particulate polymer (X5) produced as described below was used instead of the particulate polymer (X1) as a particulate polymer (X) in production of the composition for a functional layer (slurry composition). The results are shown in Table 2.

### <Production of particulate polymer (X5)>

The particulate polymer (X5) was produced by performing operations in the same way as in production of the particulate polymer (X1) of Example 1 with the exception that a colloidal dispersion liquid (X5) containing magnesium hydroxide was used instead of the colloidal dispersion liquid (X1) containing magnesium hydroxide as a metal hydroxide.

Note that the colloidal dispersion liquid (X5) containing magnesium hydroxide was produced by gradually adding an aqueous solution of 8.4 parts of sodium hydroxide dissolved in 50 parts of deionized water to an aqueous solution of 12.0 parts of magnesium chloride dissolved in 200 parts of deionized water under stirring.

### (Example 9)

Various operations, measurements, and evaluations were performed in the same way as in Example 1 with the exception that a particulate polymer (X6) produced as described below was used instead of the particulate polymer (X1) as a particulate polymer (X) in production of the composition for a functional layer (slurry composition). The results are shown in Table 2.

### <Production of particulate polymer (X6)>

The particulate polymer (X6) was produced by performing operations in the same way as in production of the particulate polymer (X1) of Example 1 with the exception that a colloidal dispersion liquid (X6) containing magnesium hydroxide was used instead of the colloidal dispersion liquid (X1) containing magnesium hydroxide as a metal hydroxide.

Note that the colloidal dispersion liquid (X6) containing magnesium hydroxide was produced by gradually adding an aqueous solution of 4.2 parts of sodium hydroxide dissolved in 50 parts of deionized water to an aqueous solution of 6.0 parts of magnesium chloride dissolved in 200 parts of deionized water under stirring.

### (Example 10)

Various operations, measurements, and evaluations were performed in the same way as in Example 1 with the exception that a particulate polymer (X7) produced as described below was used instead of the particulate polymer (X1) as a particulate polymer (X) in production of the composition for a functional layer (slurry composition). The results are shown in Table 2.

### <Production of particulate polymer (X7)>

### [Production of first monomer composition (X7)]

A first monomer composition (X7) was produced by mixing 56.8 parts of styrene as an aromatic monovinyl monomer, 13 parts of 2-ethylhexyl acrylate as a (meth)acrylic acid ester monomer, 10 parts of glycidyl methacrylate as a reactive monomer A, and 0.2 parts of ethylene glycol dimethacrylate as a cross-linkable monomer.

### [Production of second monomer composition (X7)]

A second monomer composition (X7) was produced by mixing 5 parts of styrene as an aromatic monovinyl monomer and 15 parts of glycidyl methacrylate as a reactive monomer A.

### [Suspension polymerization]

The particulate polymer (X7) was produced by suspension polymerization. Specifically, the first monomer composition (X7) obtained as described above was added to a colloidal dispersion liquid (X1) containing magnesium hydroxide that was produced in the same way as in Example 1, was further stirred therewith, and then 3.0 parts of t-butyl peroxy-2-ethylhexanoate (PERBUTYL O produced by NOF Corporation) was added as a polymerization initiator to yield a mixture. The obtained mixture was subjected to 1 minute of high-shear stirring at a rotation speed of 12,000 rpm using an inline emulsifying/dispersing device (CAVITRON produced by Pacific Machinery & Engineering Co., Ltd.) so as to form droplets of the first monomer composition (X7) in the colloidal dispersion liquid containing magnesium hydroxide.

The magnesium hydroxide-containing colloidal dispersion liquid in which droplets of the first monomer composition (X7) had been formed was loaded into a reactor, the temperature was raised to 90°C, and a polymerization reaction was performed for 1 hour. After 1 hour, the second monomer composition (X7) was added into the reactor, and a polymerization reaction was performed for a further 5 hours at 90°C. The resultant dispersion liquid was subjected to 2 hours of treatment under reduced pressure at 90°C using an evaporator to perform purification and yield a water dispersion containing the particulate polymer (X7).

### (Example 11)

Various operations, measurements, and evaluations were performed in the same way as in Example 1 with the exception that a particulate polymer (X8) produced as described below was used instead of the particulate polymer (X1) as a particulate polymer (X) in production of the composition for a functional layer (slurry composition). The results are shown in Table 3.

### <Production of particulate polymer (X8)>

The particulate polymer (X8) was produced by performing operations in the same way as in Example 1 with the exception that a monomer composition (X8) was used instead of the monomer composition (X1).

### [Production of monomer composition (X8)]

The monomer composition (X8) was produced by mixing 79.8 parts of cyclohexyl methacrylate as a (meth)acrylic acid cycloalkyl ester monomer, 10 parts of 2-ethylhexyl acrylate as a (meth)acrylic acid alkyl ester monomer, 10 parts of glycidyl methacrylate as a reactive monomer A, and 0.2 parts of ethylene glycol dimethacrylate as a cross-linkable monomer.

### (Example 12)

Various operations, measurements, and evaluations were performed in the same way as in Example 1 with the exception that a particulate polymer (Y5) produced as described below was used instead of the particulate polymer (Y1) as a particulate polymer (Y) in production of the composition for a functional layer (slurry composition). The results are shown in Table 3.

### <Production of water dispersion containing particulate polymer (Y5)>

A water dispersion containing the particulate polymer (Y5) was produced by performing operations in the same way as in Example 1 with the exception that a monomer composition (Y5) was used instead of the monomer composition (Y1).

### [Production of monomer composition (Y5)]

The monomer composition (Y5) was produced by mixing 50 parts of deionized water, 1.0 parts of sodium dodecylbenzenesulfonate as a dispersion stabilizer, 30 parts of styrene as an aromatic monovinyl monomer, 69 parts of 2-ethylhexyl acrylate as a (meth)acrylic acid alkyl ester monomer, 0.5 parts of acrylamide and 0.3 parts of methacrylic acid as reactive monomers B, and 0.2 parts of allyl methacrylate as a cross-linkable monomer.

### (Example 13)

Various operations, measurements, and evaluations were performed in the same way as in Example 1 with the exception that a particulate polymer (Y6) produced as described below was used instead of the particulate polymer (Y1) as a particulate polymer (Y) in production of the composition for a functional layer (slurry composition). The results are shown in Table 3.

### <Production of water dispersion containing particulate polymer (Y6)>

A 5 MPa pressure-resistant vessel equipped with a stirrer was charged with 62 parts of 1,3-butadiene, 35 parts of styrene, 1 part of acrylamide and 2 parts of itaconic acid as reactive monomers B, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the reaction to yield a mixture containing the particulate polymer (Y6). This mixture was adjusted to pH 8 through addition of 5% sodium hydroxide aqueous solution and was subsequently subjected to thermal-vacuum distillation to remove unreacted monomer. Thereafter, the mixture was cooled to 30°C or lower to yield a water dispersion containing the particulate polymer (Y6).

### (Example 14)

Various operations, measurements, and evaluations were performed in the same way as in Example 1 with the exception that a particulate polymer (X9) produced as described below was used instead of the particulate polymer (X1) as a particulate polymer (X) and a particulate polymer (Y7) produced as described below was used instead of the particulate polymer (Y1) in production of the slurry composition. The results are shown in Table 3.

### <Production of particulate polymer (X9)>

The particulate polymer (X9) was produced by performing operations in the same way as in production of the particulate polymer (X1) of Example 1 with the exception that a monomer composition (X9) was used instead of the monomer composition (X1).

### [Production of monomer composition (X9)]

The monomer composition (X9) was produced by mixing 72.8 parts of styrene as an aromatic monovinyl monomer, 24 parts of 2-ethylhexyl acrylate as a (meth)acrylic acid alkyl ester monomer, 3 parts of acrylamide as a reactive monomer B, and 0.2 parts of ethylene glycol dimethacrylate as a cross-linkable monomer.

### <Production of water dispersion containing particulate polymer (Y7)>

The particulate polymer (Y7) was produced by performing operations in the same way as in production of the water dispersion containing the particulate polymer (Y1) of Example 1 with the exception that a monomer composition (Y7) was used instead of the monomer composition (Y1).

### [Production of monomer composition (Y7)]

The monomer composition (Y7) was produced by mixing 50 parts of deionized water, 0.7 parts of sodium dodecylbenzenesulfonate as a dispersion stabilizer, 79 parts of n-butyl acrylate as a (meth)acrylic acid alkyl ester monomer, 15 parts of glycidyl methacrylate and 0.8 parts of methacrylic acid as reactive monomers A, 5 parts of acrylonitrile as a nitrile group-containing monomer, and 0.2 parts of allyl methacrylate as a cross-linkable monomer.

### (Example 15)

Various operations, measurements, and evaluations were performed in the same way as in Example 1 with the exception that the additive amount of the water dispersion containing the particulate polymer (Y1) was changed from 108 parts to 28 parts in terms of solid content in production of the binder composition and that the additive amount of the mixture containing non-conductive heat-resistant particles was adjusted in production of the composition for a functional layer (slurry composition) such that the mixing ratio of the non-conductive heat-resistant particles and the particulate polymer (X1) was 70:30 as a volume ratio (non-conductive heat-resistant particles:particulate polymer (X1)) and 280:30 as a mass ratio (non-conductive heat-resistant particles:particulate polymer (X1)). The results are shown in Table 4.

### (Example 16)

Various operations, measurements, and evaluations were performed in the same way as in Example 1 with the exception that the additive amount of the water dispersion containing the particulate polymer (Y1) was changed from 108 parts to 12 parts in terms of solid content in production of the binder composition and that the additive amount of the mixture containing non-conductive heat-resistant particles was adjusted in production of the composition for a functional layer (slurry composition) such that the mixing ratio of the non-conductive heat-resistant particles and the particulate polymer (X1) was 50:50 as a volume ratio (non-conductive heat-resistant particles:particulate polymer (X1)) and 200:50 as a mass ratio (non-conductive heat-resistant particles:particulate polymer (X1)). The results are shown in Table 4.

### (Example 17)

Various operations, measurements, and evaluations were performed in the same way as in Example 1 with the exception that the additive amount of the water dispersion containing the particulate polymer (Y1) was changed from 108 parts to 72 parts in terms of solid content in production of the binder composition. The results are shown in Table 4.

### (Comparative Example 1)

Various operations, measurements, and evaluations were performed in the same way as in Example 1 with the exception that a particulate polymer (X10) produced as described below was used instead of the particulate polymer (X1) as a particulate polymer (X) in production of the composition for a functional layer (slurry composition). The results are shown in Table 4.

### <Production of particulate polymer (X10)>

The particulate polymer (X10) was produced by performing operations in the same way as in production of the particulate polymer (X1) of Example 1 with the exception that a monomer composition (X10) was used instead of the monomer composition (X1).

### [Production of monomer composition (X10)]

The monomer composition (X10) was produced by mixing 72.8 parts of styrene as an aromatic monovinyl monomer, 27 parts of 2-ethylhexyl acrylate as a (meth)acrylic acid alkyl ester monomer, and 0.2 parts of ethylene glycol dimethacrylate as a cross-linkable monomer.

### (Comparative Example 2)

Various operations, measurements, and evaluations were performed in the same way as in Example 1 with the exception that a particulate polymer (Y8) produced as described below was used instead of the particulate polymer (Y1) as a particulate polymer (Y) in production of the composition for a functional layer (slurry composition). The results are shown in Table 4.

### <Production of water dispersion containing particulate polymer (Y8)>

The particulate polymer (Y8) was produced by performing operations in the same way as in production of the water dispersion containing the particulate polymer (Y1) of Example 1 with the exception that a monomer composition (Y8) was used instead of the monomer composition (Y1).

### [Production of monomer composition (Y8)]

The monomer composition (Y8) was produced by mixing 50 parts of deionized water, 1.0 parts of sodium dodecylbenzenesulfonate as a dispersion stabilizer, 94.8 parts of n-butyl acrylate as a (meth)acrylic acid alkyl ester monomer, 5 parts of acrylonitrile as a nitrile group-containing monomer, and 0.2 parts of allyl methacrylate as a cross-linkable monomer.

**[Table 1]**

| | | | | | Example 1 | Example 2 | Example 3 | Example 4 | Example 5 | Example 6 |
|---|---|---|---|---|---|---|---|---|---|---|
| Composition for electrochemical device functional layer | Particulate polymer (X) | Type | | | X1 | X2 | X3 | X1 | X1 | X1 |
| | | Chemical composition | Reactive monomer unit A (epoxy group-containing monomer unit) | GMA [mass%] | 25 | 10 | 2 | 25 | 25 | 25 |
| | | | Reactive monomer mit A (hydroxy group-containing monomer unit) | 4HBA [mass%] | - | - | - | - | - | - |
| | | | Aromatic monovinyl monomer unit | ST [mass%] | 61.8 | 66.8 | 71.8 | 61.8 | 61.8 | 61.8 |
| | | | (Meth)acrylic acid alkyl ester monomer unit | 2EHA [mass%] | 13 | 23 | 26 | 13 | 13 | 13 |
| | | | (Meth)acrylic acid cycloalkyl ester monomer unit | CHMA [mass%] | - | - | - | - | - | - |
| | | | Cross-linkable monomer unit | EDMA [mass%] | 0.2 | 0.2 | 0.2 | 0.2 | 0.2 | 0.2 |
| | | | Reactive monomer unit B | Aam [mass%] | - | - | - | - | - | - |
| | | Volume-average particle diameter D50 [µm] | | | 40 | 4.1 | 42 | 40 | 4.0 | 4.0 |
| | | Degree of swelling in electrolyte solution [%] | | | 250 | 200 | 160 | 250 | 250 | 250 |
| | | Glass-transition temperature [°C] | | | 71 | 71 | 71 | 71 | 71 | 71 |
| | Particulate polymer (Y) | Type | | | Y1 | Y1 | Y1 | Y2 | Y3 | Y4 |
| | | Chemical composition | Reactive monomer unit B | Aam [mass%] | 4 | 4 | 4 | - | - | - |
| | | | | NIPAM [mass%] | - | - | - | 1 | - | |
| | | | | MLAH [mass%] | - | - | - | - | 1 | - |
| | | | | NMA [mass%] | - | - | - | - | - | 1 |
| | | | | MAA [mass%] | 0.8 | 0.8 | 0.8 | 1 | 1 | 1 |
| | | | | IA [mass%] | - | - | - | - | - | - |
| | | | (Meth)acrylic acid alkyl ester monomer unit | BA [mass%] | 90 | 90 | 90 | 94 | 94 | 94 |
| | | | | 2EHA [mass%] | - | - | - | - | - | - |
| | | | Aromatic monovinylmonomer unit | ST [mass%] | - | - | - | - | - | - |
| | | | Nitrile group-containing monomer unit | AN [mass%] | 5 | 5 | 5 | 2 | 2 | 2 |
| | | | Cross-linkable monomer unit | AMA [mass%] | 0.2 | 0.2 | 0.2 | 2 | 2 | 2 |
| | | | Conjugated diene monomer unit | BD [mass%] | - | - | - | - | - | - |
| | | | Reactive monomer unit A (epoxy group-containing monomer unit) | GMA [mass%] | - | - | - | - | - | - |
| | | Glass-transition temperature [°C] | | | -40 | -40 | -40 | -45 | -45 | -45 |
| | | Volume-average particle diameter D50 [µm] | | | 0.15 | 0.15 | 0.15 | 0.15 | 0.15 | 0.15 |
| | Non-conductive heat-resistant particles | Type | | | Alumina | Alumina | Alumina | Alumina | Alumina | Alumina |
| | | Volume-average particle diameter D50 [µm] | | | 0.7 | 0.7 | 0.7 | 0.7 | 0.7 | 0.7 |
| | Amine compound | Type | | | BIT | BIT | BIT | BIT | BIT | BIT |
| | Volume ratio [non-conductive heat-resistant particles:particulate polymer (X)] | | | | 90:10 | 90:10 | 90:10 | 90:10 | 90:10 | 90:10 |
| | Mass ratio [non-conductive heat-resistant particles:particulate polymer (X)] | | | | 360:10 | 360:10 | 360:10 | 360:10 | 360:10 | 360:10 |
| | Content of particulate polymer (Y) relative to 100 parts by mass of particulate polymer (X) [parts by mass] | | | | 108 | 108 | 108 | 108 | 108 | 108 |
| | Content of particulate polymer (Y) relative to 100 parts by mass of non-conductive heat-resistant particles [parts by mass] | | | | 3 | 3 | 3 | 3 | 3 | 3 |
| | Mass ratio [non-conductive heat-resistant particles:particulate polymer (X) + particulate polymer (Y)] | | | | 3600:208 | 3600:208 | 3600:208 | 3600:208 | 3600:208 | 3600:208 |
| Thickness of non-conductive heat-resistant particle laver [µm] | | | | | 2.0 | 2.0 | 2.0 | 2.0 | 2.0 | 20 |
| Volume-average particle diameter of particulate polymer (X)/ Thickness of non-conductive heat-resistart particle laver | | | | | 2.0 | 2.1 | 2.1 | 2.0 | 2.0 | 20 |
| Evaluation results | | | Functional layer | Air permeability | A | A | A | A | A | A |
| | | | | Heat resistance | A | A | A | A | A | A |
| | | | | Dry adhesiveness | A | A | B | B | B | B |
| | | | | Wet adhesiveness | A | B | B | B | B | B |
| | | | Secondary battery | Output characteristics | A | A | A | A | A | A |
| | | | | Cycle characteristics | A | A | A | A | A | A |

**[Table 2]**

| | | | | | Example 7 | Example 8 | Example 9 | Example 10 |
|---|---|---|---|---|---|---|---|---|
| Composition for electrochemical device functional layer | Particulate polymer (X) | Type | | | X4 | X5 | X6 | X7 |
| | | Chemical composition | Reactive monomer unit A (epoxy group-containing monomer unit) | GMA [mass%] | - | 25 | 25 | 25 |
| | | | Reactive monomer unit A (hydroxy group-containing monomer unit) | 4HBA [mass%] | 10 | - | - | - |
| | | | Aromatic monovinyl monomer unit | ST [mass%] | 70.8 | 61.8 | 61.8 | 61.8 |
| | | | (Meth)acrylic acid alkyl ester monomer unit | 2EHA [mass%] | 19 | 13 | 13 | 13 |
| | | | (Meth)acrylic acid cycloalkyl ester monomer unit | CHMA [mass%] | - | - | - | - |
| | | | Cross-linkable monomer unit | EDMA [mass%] | 0.2 | 0.2 | 0.2 | 0.2 |
| | | | Reactive monomer unit B | Aam [mass%] | - | - | - | - |
| | | Volume-average particle diameter D50 [µm] | | | 4.0 | 2.1 | 6.5 | 4.2 |
| | | Degree of swelling in electrolyte solution [%] | | | 230 | 250 | 250 | 250 |
| | | Glass-transition temperature [°C] | | | 68 | 71 | 71 | 71 |
| | Particulate polymer (Y) | Type | | | Y1 | Y1 | Y1 | Y1 |
| | | Chemical composition | Reactive monomer unit B | Aam [mass%] | 4 | 4 | 4 | 4 |
| | | | | NIPAM [mass%] | - | - | - | - |
| | | | | MLAH [mass%] | | | | |
| | | | | NMA [mass%] | - | - | - | - |
| | | | | MAA [mass%] | 0.8 | 0.8 | 0.8 | 0.8 |
| | | | | IA [mass%] | - | - | - | - |
| | | | (Meth)acrylic acid alkyl ester monomer unit | BA [mass%] | 90 | 90 | 90 | 90 |
| | | | | 2EHA [mass%] | - | - | - | - |
| | | | Aromatic monovinyl monomer unit | ST [mass%] | - | - | - | - |
| | | | Nitrile group-containing monomer unit | AN [mass%] | 5 | 5 | 5 | 5 |
| | | | Cross-linkable monomer unit | AMA [mass%] | 0.2 | 0.2 | 0.2 | 0.2 |
| | | | Conjugated diene monomer unit | BD [mass%] | - | - | - | - |
| | | | Reactive monomer unit A (epoxy group-containing monomer unit) | GMA [mass%] | - | - | - | - |
| | | Glass-transition temperature [°C] | | | -40 | -40 | -40 | -40 |
| | | Volume-average particle diameter D50 [µm] | | | 0.15 | 0.15 | 0.15 | 0.15 |
| | Non-conductive | Type | | | Alumina | Alumina | Alumina | Alumina |
| | heat-resistant particles | Volume-average particle diameter D50 [µm] | | | 0.7 | 0.7 | 0.7 | 0.7 |
| | Amine compound | Type | | | BIT | BIT | BIT | BIT |
| | Volume ratio [non-conductive heat-resistant particles particulate polymer (X)] | | | | 90:10 | 90:10 | 90:10 | 90:10 |
| | Mass ratio [non-conductive heat-resistant particles particulate polymer (X)] | | | | 360:10 | 360:10 | 360:10 | 360:10 |
| | Content of particulate polymer (Y) relative to 100 parts by mass of particulate polymer (X) [parts by mass] | | | | 108 | 108 | 108 | 108 |
| | Content of particulate polymer (Y) relative to 100 parts by mass of non-conductive heat-resistant particles [parts by mass] | | | | 3 | 3 | 3 | 3 |
| | Mass ratio [non-conductive heat-resistant particles:particulate polymer (X) + particulate polymer (Y)] | | | | 3600:208 | 3600208 | 3600:208 | 3600:208 |
| Thickness of non- conductive heat-resistant particle layer [µm] | | | | | 2.0 | 2.0 | 2.0 | 2.0 |
| Volume-average particle diameter of particulate polymer (X)/ Thickness of non-conductive heat-resistant particle layer | | | | | 2.0 | 1.1 | 3.3 | 2.1 |
| Evaluation results | | | Functional layer | Air permeability | A | A | A | A |
| | | | | Heat resistance | A | A | A | A |
| | | | | Dry adhesiveness | B | A | B | A+ |
| | | | | Wet adhesiveness | B | A | B | A+ |
| | | | Secondary battery | Output characteristics | A | A | A | A |
| | | | | Cycle characteristics | A | A | A | A |

**[Table 3]**

| | | | | | Example 11 | Example 12 | Example 13 | Example 14 |
|---|---|---|---|---|---|---|---|---|
| Composition for electrochemical device functional layer | Particulate polymer (X) | Type | | | X8 | X1 | X1 | X9 |
| | | Chemical composition | Reactive monomer unit A (epoxy group-containing monomer unit) | GMA [mass%] | 10 | 25 | 25 | - |
| | | | Reactive monomer unit A (hydroxy group-containing monomer unit) | 4HBA [mass%] | - | - | - | - |
| | | | Aromatic monovinyl monomer unit | ST [mass%] | - | 61.8 | 61.8 | 72.8 |
| | | | (Meth)acrylic acid alkyl ester monomer unit | 2EHA [mass%] | 10 | 13 | 13 | 24 |
| | | | (Meth)acrylic acid cycloalkyl ester monomer unit | CHMA [mass%] | 79.8 | - | - | - |
| | | | Cross-linkable monomer unit | EDMA [mass%] | 0.2 | 0.2 | 0.2 | 0.2 |
| | | | Reactive monomer unit B | Aam [mass%] | - | - | - | 3 |
| | | Volume-average particle diameter D50 [µm] | | | 3.8 | 4.0 | 4.0 | 3.5 |
| | | Degree of swelling in electrolyte solution [%] | | | 140 | 200 | 200 | 210 |
| | | Glass-transition temperature [°C] | | | 65 | 71 | 71 | 70 |
| | Particulate polymer (Y) | Type | | | Y1 | Y5 | Y6 | Y7 |
| | | Chemical composition | Reactive monomer unit B | Aam [mass%] | 4 | 0.5 | 1 | - |
| | | | | NIPAM [mass%] | - | - | - | - |
| | | | | MLAH [mass%] | - | - | - | - |
| | | | | NMA [mass%] | - | - | - | - |
| | | | | MAA [mass%] | 0.8 | 0.3 | - | 0.8 |
| | | | | IA [mass%] | - | - | 2 | - |
| | | | (Meth)acrylic acid alkyl ester monomer unit | BA | 90 | - | - | 79 |
| | | | | 2EHA [mass%] | - | 69 | - | - |
| | | | Aromatic monovinyl monomer unit | ST [mass%] | - | 30 | 35 | - |
| | | | Nitrile group-containing monomer unit | AN [mass%] | 5 | - | - | 5 |
| | | | Cross-linkable monomer unit | AMA [mass%] | 0.2 | 0.2 | - | 0.2 |
| | | | Conjugated diene monomer unit | BD [mass%] | - | - | 62 | - |
| | | | Reactive monomer unit A (epoxy group-containing monomer unit) | GMA [mass%] | - | - | - | 15 |
| | | Glass-transition temperature [°C] | | | -40 | -35 | -20 | -20 |
| | | Volume-average particle diameter D50 [µm] | | | 0.15 | 0.15 | 0.15 | 0.15 |
| | Non-conductive heat-resistant particles | Type | | | Alumina | Alumina | Alumina | Alumina |
| | | Volume-average particle diameter D50 [µm] | | | 0.7 | 0.7 | 0.7 | 0.7 |
| | Amine compound | Type | | | BIT | BIT | BIT | BIT |
| | Volume ratio [non-conductive heat-resistant particles:particulate polymer (X)] | | | | 90:10 | 90:10 | 90:10 | 90:10 |
| | Mass ratio [non-conductive heat-resistant particles:particulate polymer (X)] | | | | 360:10 | 360:10 | 360:10 | 360:10 |
| | Content of particulate polymer (Y) relative to 100 parts by mass of particulate polymer (X) [parts by mass] | | | | 108 | 108 | 108 | 108 |
| | Content of particulate polymer (Y) relative to 100 parts by mass of non-conductive heat-resistant particles [parts by mass] | | | | 3 | 3 | 3 | 3 |
| | Mass ratio [non-conductive heat-resistant particles particulate polymer (X) + particulate polymer (Y)] | | | | 3600:208 | 3600208 | 3600:208 | 3600:208 |
| Thickness of non-conductive heat-resistant particle layer [µm] | | | | | 2.0 | 2.0 | 2.0 | 2.0 |
| Volume-average particle diameter of particulate polymer (X) Thickness of non-conductive heat-resistant particle layer | | | | | 1.9 | 2.0 | 2.0 | 1.8 |
| Evaluation results | | | Functional layer | Air permeability | A | A | A | A |
| | | | | Heat resistance | A | A | A | A |
| | | | | Dry adhesiveness | A | B | A | A |
| | | | | Wet adhesiveness | A | B | A | A |
| | | | Secondary battery | Output characteristics | A | A | A | A |
| | | | | Cycle characteristics | A | A | A | A |

**[Table 4]**

| | | | | | Example 15 | Example 16 | Example 17 | Comparative Example 1 | Comparative Example 2 |
|---|---|---|---|---|---|---|---|---|---|
| Composition for electrochemical device functional layer | Particulate polymer (X) | Type | | | X1 | X1 | X1 | X10 | X1 |
| | | Chemical composition | Reactive mommer unit A (epoxy group-containing monomer unit) | GMA [mass%] | 25 | 25 | 25 | - | 25 |
| | | | Reactive monomer unit A (hydroxy group-containing monomer unit) | 4HBA [mass%] | - | - | - | - | - |
| | | | Aromatic monovinyl manomer unit | ST [mass%] | 61.8 | 61.8 | 61.8 | 72.8 | 61.8 |
| | | | (Meth)acrylic acid alkyl ester monomer unit | 2EHA [mass%] | 13 | 13 | 13 | 27 | 13 |
| | | | (Meth)acrylic acid cycloalkyl ester monomer unit | CHMA [mass%] | - | - | - | - | - |
| | | | Cross-linkable monomer unit | EDMA [mass%] | 0.2 | 0.2 | 0.2 | 0.2 | 0.2 |
| | | | Reactive monomer unit B | Aam [mass%] | - | - | - | - | - |
| | | Volume-average particle diameter D50 [µm] | | | 40 | 40 | 4.0 | 4 | 4.0 |
| | | Degree of swelling in electrolyte solution [%] | | | 200 | 200 | 200 | 160 | 200 |
| | | Glass-transition temperature [°C] | | | 71 | 71 | 71 | 71 | 71 |
| | Particulate polymer (Y) | Type | | | Y1 | Y1 | Y1 | Y1 | Y8 |
| | | Chemical composition | Reactive monomer unit B | Aam [mass%] | 4 | 4 | 4 | 4 | - |
| | | | | NIPAM [mass%] | - | - | - | - | - |
| | | | | MLAH [mss%] | - | - | - | - | - |
| | | | | NMA [mass%] | - | - | - | - | - |
| | | | | MAA [mass%] | 0.8 | 0.8 | 0.8 | 0.8 | - |
| | | | | IA [mass%] | - | - | - | - | - |
| | | | (Meth)acrylic acid alkyl ester monomer unit | BA [mass%] | 90 | 90 | 90 | 90 | 94.8 |
| | | | | 2EHA [mass%] | - | - | - | - | - |
| | | | Aromatic monovinyl monomer unit | ST [mass%] | - | - | - | - | - |
| | | | Nitrile group-containing monomer unit | AN [mass%] | 5 | 5 | 5 | 5 | 5 |
| | | | Cross-linkable monomer unit | AMA [mass%] | 0.2 | 0.2 | 0.2 | 0.2 | 0.2 |
| | | | Conjugated diene monomer unit | BD [mass%] | - | - | - | - | - |
| | | | Reactive monomer unit A (epoxy group-containing monomer unit) | GMA [mass%] | - | - | - | - | - |
| | | Glass-transition temperature [°C] | | | -40 | -40 | -40 | -40 | -45 |
| | | Volume-average particle diameter D50 [µm] | | | 0.15 | 0.15 | 0.15 | 0.15 | 0.4 |
| | Non-conductive heat-resistant particles | Type | | | Alumina | Alumina | Alumina | Alumina | Alumina |
| | | Volume-average particle diameter D50 [µm] | | | 0.7 | 0.7 | 0.7 | 0.7 | 0.7 |
| | Amine compound | Type | | | BIT | BIT | BIT | BIT | BIT |
| | Volume ratio [non-conductive heat-resistant particles:particulate polymer (X)] | | | | 70:30 | 50:50 | 90:10 | 90:10 | 90:10 |
| | Mass ratio [non-conductive heat-resistant particles:particulate polymer (X)] | | | | 280:30 | 200:50 | 360:10 | 360:10 | 360:10 |
| | Content of particulate polymer (Y) relative to 100 parts by mass of particulate polymer (X) [parts by mass] | | | | 28 | 12 | 72 | 108 | 108 |
| | Content of particulate polymer (Y) relative to 100 parts by mass of non-conductive heat-resistant particles [parts by mass] | | | | 3 | 3 | 2 | 3 | 3 |
| | Mass ratio [non-conductive heat-resistant particles:particulate polymer (X) + particulate polymer (Y)] | | | | 2800:384 | 200:56 | 3600:172 | 3600:208 | 3600:208 |
| Thickness of non-conductive heat-resistant particle laver [µm] | | | | | 2.0 | 2.0 | 20 | 2.0 | 2.0 |
| Volume-average particle diameter of particulate polymer (X)/ Thickness of non-conductive heat-resistant particle layer | | | | | 2.0 | 2.0 | 20 | 2.0 | 2.0 |
| Evaluation results | | | Functional layer | Air permeability | B | B | A | A | A |
| | | | | Heat resistance | B | B | B | A | A |
| | | | | Dry adhesiveness | A | A+ | A | C | C |
| | | | | Wet adhesiveness | A | A+ | A | C | C |
| | | | Secondary battery | Output characteristics | A | B | A | A | A |
| | | | | Cycle characteristics | A | B | A | C | C |

In Tables 1 to 4:
"GMA" indicates glycidyl methacrylate unit;
"4HBA" indicates 4-hydroxybutyl acrylate unit;
"ST" indicates styrene unit;
"2EHA" indicates 2-ethylhexyl acrylate unit;
"CHMA" indicates cyclohexyl methacrylate unit;
"EDMA" indicates ethylene glycol dimethacrylate unit;
"Aam" indicates acrylamide unit;
"NIPAM" indicates N-isopropylacrylamide unit;
"MLAH" indicates maleic anhydride unit;
"NMA" indicates N-methylolacrylamide unit;
"MAA" indicates methacrylic acid unit;
"IA" indicates itaconic acid unit;
"BA" indicates n-butyl acrylate unit;
"AN" indicates acrylonitrile unit;
"AMA" indicates allyl methacrylate unit;
"BD" indicates 1,3-butadiene unit; and
"BIT" indicates 1,2-benzo-4-isothiazolin-3-one.

It can be seen from Tables 1 to 4 that a functional layer having excellent adhesiveness can be formed through the compositions for a functional layer of Examples 1 to 17, which each contain a particulate polymer (X) and a particulate polymer (Y) having a smaller volume-average particle diameter than the particulate polymer (X), and in each of which one of the particulate polymer (X) and the particulate polymer (Y) includes a specific reactive monomer unit A while the other of the particulate polymer (X) and the particulate polymer (Y) includes a specific reactive monomer unit B.

It can also be seen that adhesiveness of a formed functional layer is poor in the case of the compositions for a functional layer of Comparative Examples 1 and 2 in which either or both of a particulate polymer (X) and a particulate polymer (Y) do not include the specific reactive monomer units mentioned above.

### INDUSTRIAL APPLICABILITY

According to the present disclosure, it is possible to provide a composition for an electrochemical device functional layer that can form a functional layer having excellent adhesiveness.

Moreover, according to the present disclosure, it is possible to provide a laminate for an electrochemical device that includes a functional layer obtained using this composition for an electrochemical device functional layer and an electrochemical device that includes this laminate for an electrochemical device.

## Claims

1. A composition for an electrochemical device functional layer comprising a particulate polymer (X) and a particulate polymer (Y), wherein
a volume-average particle diameter of the particulate polymer (Y) is smaller than a volume-average particle diameter of the particulate polymer (X),
one of the particulate polymer (X) and the particulate polymer (Y) includes a reactive monomer unit A and the other of the particulate polymer (X) and the particulate polymer (Y) includes a reactive monomer unit B,
the reactive monomer unit A is an epoxy group-containing monomer unit or a hydroxy group-containing monomer unit,
the reactive monomer unit B includes one or more selected from the group consisting of a (meth)acrylamide group-containing monomer unit, an acid anhydride monomer unit, a sulfo group-containing monomer unit, a phosphate group-containing monomer unit, and an amino group-containing monomer unit in a case in which the reactive monomer unit A is an epoxy group-containing monomer unit, and
the reactive monomer unit B includes one or more selected from the group consisting of a (meth)acrylamide group-containing monomer unit, a carboxy group-containing monomer unit, an acid anhydride monomer unit, a sulfo group-containing monomer unit, a phosphate group-containing monomer unit, and an epoxy group-containing monomer unit in a case in which the reactive monomer unit A is a hydroxy group-containing monomer unit.

2. The composition for an electrochemical device functional layer according to claim 1, wherein the volume-average particle diameter of the particulate polymer (X) is not less than 1 µm and not more than 10 µm.

3. The composition for an electrochemical device functional layer according to claim 1, wherein the particulate polymer (X) includes one or more selected from the group consisting of an aromatic monovinyl monomer unit, a (meth)acrylic acid cycloalkyl ester monomer unit, and a (meth)acrylic acid alkyl ester monomer unit.

4. The composition for an electrochemical device functional layer according to claim 1, wherein the particulate polymer (Y) includes either or both of an aromatic monovinyl monomer unit and a (meth)acrylic acid alkyl ester monomer unit.

5. The composition for an electrochemical device functional layer according to claim 1, wherein content of the particulate polymer (Y) is not less than 10 parts by mass and not more than 200 parts by mass per 100 parts by mass of the particulate polymer (X).

6. The composition for an electrochemical device functional layer according to claim 1, further comprising non-conductive heat-resistant particles.

7. The composition for an electrochemical device functional layer according to claim 6, wherein content of the particulate polymer (Y) is not less than 0.5 parts by mass and not more than 6 parts by mass per 100 parts by mass of the non-conductive heat-resistant particles.

8. A laminate for an electrochemical device comprising: a substrate; and a functional layer for an electrochemical device formed on the substrate, wherein the functional layer for an electrochemical device is obtained using the composition for an electrochemical device functional layer according to any one of claims 1 to 7.

9. The laminate for an electrochemical device according to claim 8, wherein a ratio of the volume-average particle diameter of the particulate polymer (X) relative to thickness of a non-conductive heat-resistant particle layer formed of non-conductive heat-resistant particles is not less than 0.8 and not more than 10.

10. An electrochemical device comprising the laminate for an electrochemical device according to claim 8.
